# EUROPEAN PATENT SPECIFICATION

(11) **EP 3 908 059 B1**
(45) Date of publication and mention of the grant of the patent: **01.04.2026**
(21) Application number: 20735996.9
(22) Date of filing: 03.01.2020
(51) Int. Cl.: H04W 72/04, H04L 1/16, H04L 1/18

(54) **INFORMATION TRANSMISSION METHOD, TERMINAL AND NETWORK DEVICE**
INFORMATIONSÜBERTRAGUNGSVERFAHREN, ENDGERÄT UND NETZWERKVORRICHTUNG
PROCÉDÉ DE TRANSMISSION D'INFORMATIONS, TERMINAL ET DISPOSITIF RÉSEAU

(30) Priority: 04.01.2019 CN 201910009124
(43) Date of publication of application: 10.11.2021
(73) Proprietor: Datang Mobile Communications Equipment Co., Ltd., Beijing 100083 (CN)
(72) Inventor: GAO, Xuejuan, Beijing 100191 (CN); SI, Qianqian, Beijing 100191 (CN); EKPENYONG, Tony, Beijing 100191 (CN)
(74) Representative: Maiwald GmbH
(86) International application number: PCT/CN2020/070229
(87) International publication number: WO 2020/140965

(56) References cited:
- EP-A1- 3 706 490
- WO-A1-2018/228523
- WO-A1-2019/095808
- CN-A- 103 684 705
- CN-A- 103 828 318
- CN-A- 106 301 720
- CN-A- 107 210 851
- HUAWEI ET AL: "CSI feedback enhancements for URLLC", vol. RAN WG1, no. Busan, Korea; 20180521 - 20180525, 20 May 2018 (2018-05-20), XP051442092, Retrieved from the Internet <URL:http://www.3gpp.org/ftp/Meetings%5F3GPP%5FSYNC/RAN1/Docs/> [retrieved on 20180520]
- ERICSSON: "On remaining details of CSI reporting", vol. RAN WG1, no. Prague, CZ; 20171009 - 20171013, 8 October 2017 (2017-10-08), XP051341614, Retrieved from the Internet <URL:http://www.3gpp.org/ftp/Meetings_3GPP_SYNC/RAN1/Docs/> [retrieved on 20171008]
- HUAWEI ET AL: "Discussion on aperiodic CSI feedback on PUCCH in NR", vol. RAN WG1, no. Sanya, China; 20180416 - 20180420, 15 April 2018 (2018-04-15), XP051426715, Retrieved from the Internet <URL:http://www.3gpp.org/ftp/Meetings%5F3GPP%5FSYNC/RAN1/Docs/> [retrieved on 20180415]

## Description

### TECHNICAL FIELD

The present disclosure relates to the technical field of communication applications, and in particular, to an information transmission method, a terminal and a network device.

### BACKGROUND

In the New Radio (NR) Rel-15, aperiodic channel state information (CSI) is transmitted through a physical uplink shared channel (PUSCH). A base station notifies user equipment (UE) of whether to perform aperiodic CSI report through a CSI request field in downlink control information (DCI) format 1_0 scheduling the PUSCH.

The CSI request field of the DCI format 1_0 may have 0, 1, 2, 3, 4, 5 or 6 bits. When the CSI request field is all 0, no CSI report is triggered. Otherwise, aperiodic CSI is reported according to higher layer configuration information. The base station can trigger the aperiodic CSI report to be transmitted together with uplink data, or trigger only the aperiodic CSI report.

DCI format 1_0 contains time domain resource allocation information and frequency domain resource allocation information. Aperiodic CSI and data (if present) are transmitted on a resource indicated by DCI format 1_0. When the DCI triggering the aperiodic CSI and the report of the aperiodic CSI are in the same slot, a reference resource for the aperiodic CSI is a slot of the DCI transmission; otherwise, the reference resource for the aperiodic CSI is a valid downlink slot which satisfies a CSI processing latency and is closest to the CSI report slot.

In the NR Rel-16, it is possible to support the use of downlink DCI to trigger a UE to transmit aperiodic CSI in a short physical uplink control channel (PUCCH) format, but there is no specific transmission scheme therefor thus far.

HUAWEI ET AL: "CSI feedback enhancements for URLLC" 3GPP DRAFT R1-1806892 discusses the Aperiodic CSI on short PUCCH. It proposes A-CSI report on Short PUCCH should be triggered by DL related DCI. With respect to different PUCCH resources for HARQ-ACK and A-CSI, it proposes to still reuse the resource allocation field for HARQ-ACK to jointly indicate two different PUCCH resources in one slot.

ERICSSON: "On remaining details of CSI reporting" 3GPP DRAFT R1-1718432 discusses the CSI reporting. It recites triggering of A-CSI on PUCCH must be done with DL-related DCI. It also recites if HARQ-ACK and CSI are triggered simultaneously, separate PUCCH resources are used for the respective transmissions.

HUAWEI ET AL: "Discussion on aperiodic CSI feedback on PUCCH in NR" 3GPP DRAFT R1-1804434 discusses triggering A-CSI on short PUCCH and PUCCH resource for A-CSI. It recites if HARQ-ACK and A-CSI are triggered by the same DL-related DCI, it is simple to have the same PUCCH resource for HARQ-ACK and A-CSI. Nevertheless, allocating the same PUCCH resource for HARQ-ACK and A-CSI would limit the flexibility for the gNB. It is more beneficial to support using different PUCCH resources for HARQ-ACK and A-CSI.

### SUMMARY

The invention is set out in independent claims 1, 5, 9 and 13.

### BRIEF DESCRIPTION OF THE DRAWINGS

FIG. 1 is a structural diagram of a network system applicable to some embodiments of the present disclosure;
FIG. 2 is a first schematic flowchart of an information transmission method according to some embodiments of the present disclosure;
FIG. 3 is a second schematic flowchart of an information transmission method according to some embodiments of the present disclosure;
FIG. 4 is a first schematic diagram of the transmission of aperiodic CSI and HARQ-ACK according to some embodiments of the present disclosure;
FIG. 5 is a second schematic diagram of the transmission of aperiodic CSI and HARQ-ACK according to some embodiments of the present disclosure;
FIG. 6 is a block diagram of a terminal according to some embodiments of the present disclosure;
FIG. 7 is a schematic diagram of modules of a terminal according to some embodiments of the present disclosure;
FIG. 8 is a block diagram of a network device according to some embodiments of the present disclosure;
FIG. 9 is a schematic diagram of modules of a network device according to some embodiments of the present disclosure.

### DETAILED DESCRIPTION OF THE EMBODIMENTS

The Exemplary embodiments of the present disclosure will be described in more detail below with reference to the accompanying drawings. Although exemplary embodiments of the present disclosure are shown in the drawings, it should be understood that the present disclosure may be implemented in various forms, without being limited by the embodiments described herein.

The terms "first", "second" and the like in the specification and claims of the present application are used to distinguish similar objects, and are not necessarily used to describe a particular order or chronological order. It is to be understood that terms used in this way may be interchangeable under appropriate circumstances, so that embodiments of the present application described herein may be implemented in a sequence other than those illustrated or described herein. In addition, such terms as "comprise", "have" and any variants thereof are intended to cover non-exclusive inclusions, for example, a process, a method, a system, a product, or a device that includes a series of steps or units is not necessarily limited to those steps or units clearly listed, but may include other steps or units not explicitly listed or inherent to such processes, methods, products or devices. Use of "and/or" in the description and claims represents at least one of connected objects.

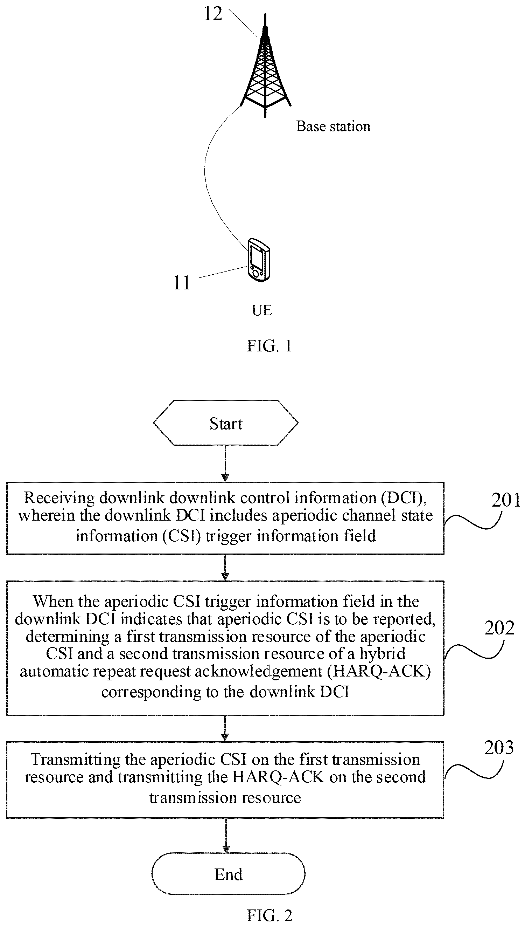

Referring to FIG. 1, FIG. 1 is a structural diagram of a network system to which some embodiments of the present disclosure are applicable. As shown in FIG. 1, the network system includes a terminal 11 and a network side device 12, wherein, the terminal 11 may be user equipment (UE) or other terminal device, for example, may be a terminal side device such as a mobile phone, a tablet personal computer, a laptop computer, a personal digital assistant (PDA), a mobile internet device (MID) or a wearable device. It should be noted that a specific type of the terminal 11 is not limited in embodiments of the present disclosure. The network side device 12 may be a base station, such as a macro station, Long Term Evolution (LTE) eNB, 5G New Radio (NR) NB, etc. The network side device may also be a small station, such as a low power node (LPN), pico, femto, etc., or, the network side device can be an access point (AP); the base station can also be a network node formed collectively by a central unit (CU) and a plurality of transmission reception points (TRPs) managed and controlled by the CU. It should be noted that the specific type of the network side device is not limited in embodiments of the present disclosure.

As shown in FIG. 2, some embodiments of the present disclosure provide an information transmission method, applied to a terminal, including a step 201, a step 202 and a step 203.

Step 201: receiving downlink downlink control information (DCI), wherein the downlink DCI includes aperiodic channel state information (CSI) trigger information field.

Here, the aperiodic CSI trigger information field in the downlink DCI is used to indicate whether the terminal is to report aperiodic CSI (A-CSI).

In some embodiments of the present disclosure, the downlink DCI is at least one of the following:
DCI indicating semi-persistent scheduling (SPS) physical downlink shared channel (PDSCH) release;
DCI scheduling PDSCH transmission.

Further, when the downlink DCI is the DCI indicating the SPS PDSCH release, the HARQ-ACK corresponding to the downlink DCI is an HARQ-ACK corresponding to the DCI indicating the SPS PDSCH release;
when the downlink DCI is the DCI scheduling the PDSCH transmission, the HARQ-ACK corresponding to the downlink DCI is an HARQ-ACK of the PDSCH scheduled by the downlink DCI.

Step 202: when the aperiodic CSI trigger information field in the downlink DCI indicates that aperiodic CSI is to be reported, determining a first transmission resource for the aperiodic CSI and a second transmission resource for a hybrid automatic repeat request acknowledgement (HARQ-ACK) corresponding to the downlink DCI.

Here, the first transmission resource and the second transmission resource are two independently configured transmission resources. The terminal determines the transmission resource for the aperiodic CSI and the transmission resource for the HARQ-ACK corresponding to the downlink DCI separately, so as to realize independent transmission of the aperiodic CSI and the HARQ-ACK corresponding to the downlink DCI. The independent configuration here is at least manifested as the independent configuration of one of feedback timing and specific resource. The other of feedback timing and specific resource can be independently configured as well, but of course its configuration can be shared, that is, have same configuration.

Step 203: transmitting the aperiodic CSI on the first transmission resource, and transmitting the HARQ-ACK on the second transmission resource.

In the information transmission method according to some embodiments of the present disclosure, downlink downlink control information (DCI) is received, wherein the downlink DCI includes aperiodic channel state information (CSI) trigger information field; when the aperiodic CSI trigger information field in the downlink DCI indicates that aperiodic CSI is to be reported, a first transmission resource for the aperiodic CSI and a second transmission resource for a hybrid automatic repeat request acknowledgement HARQ-ACK corresponding to the downlink DCI are determined; the aperiodic CSI is transmitted on the first transmission resource, and the HARQ-ACK is transmitted on the second transmission resource. Some embodiments of the present disclosure perform independent transmission of aperiodic CSI and HARQ-ACK, which can effectively avoid the impact on the transmission content of PUCCH carrying HARQ-ACK when the terminal fails to detect the DCI triggering the aperiodic report, and effectively improves system performance and transmission efficiency.

Further, the determining a first transmission resource for the aperiodic CSI in the above step 202 includes:
determining a first feedback timing of the aperiodic CSI and a first physical uplink control channel (PUCCH) resource for transmitting the aperiodic CSI;
the determining a second transmission resource for HARQ-ACK corresponding to the downlink DCI in the above step 202 includes:
   determining a second feedback timing of the HARQ-ACK and a second PUCCH resource for transmitting the HARQ-ACK;
   wherein, the first feedback timing is different from the second feedback timing, and/or the first PUCCH resource is different from the second PUCCH resource.

The first feedback timing being different from the second feedback timing may refer to that the first feedback timing and the second feedback timing are in different slots, or in non-overlapping symbols of a same slot, such as, in a first half of a slot and a second half of the slot. The first PUCCH resource being different from the second PUCCH resource may refer to that the first PUCCH resource and the second PUCCH resource do not overlap in the time domain, and the non-overlap may be manifested as not being in the same slot, or manifested as being in non-overlapping symbols of a same slot.

Specifically, the first feedback timing is an interval between a first time domain resource of downlink DCI triggering the aperiodic CSI and a second time domain resource for transmitting the aperiodic CSI.

The first time domain resource is a slot in which downlink DCI triggering the aperiodic CSI is transmitted, and the second time domain resource is a slot in which the PUCCH for transmitting the aperiodic CSI is transmitted; at this time, the above interval is the slot interval between the slot in which the downlink DCI triggering the aperiodic CSI is transmitted and the slot in which the PUCCH transmitting the aperiodic CSI is transmitted. For example, it can be defined that the downlink DCI is in a slot n, if the aperiodic CSI trigger information field indicates that aperiodic CSI needs to be reported, the aperiodic CSI is reported in a slot n+k, where k is the first feedback timing.

Or, the first time domain resource is a last symbol of the downlink DCI triggering the aperiodic CSI, and the second time domain resource is a first symbol of the PUCCH transmitting the aperiodic CSI. At this time, the interval is a symbol interval between the last symbol of the downlink DCI triggering the aperiodic CSI and the first symbol of the PUCCH transmitting the aperiodic CSI.

In some embodiments of the present disclosure, the first feedback timing is pre-configured by higher layer signaling, or is indicated by an aperiodic CSI feedback timing indication field in the downlink DCI; when the first feedback timing is indicated by an aperiodic CSI feedback timing indication field in the downlink DCI, the aperiodic CSI feedback timing indicator field in the downlink DCI can directly indicate a first feedback timing value. Of course, the aperiodic CSI feedback timing indicator field can also indicate a value in the first feedback timing set pre-configured by higher layer signaling, for example, indicate a feedback timing value by indicating the number of each value in the pre-configured first feedback timing set.

Or, the first feedback timing is indicated by an HARQ-ACK feedback timing indication field in the downlink DCI. This case is equivalent to that the first feedback timing and the second feedback timing are the same. For example, the aperiodic CSI and the HARQ-ACK corresponding to the downlink DCI are transmitted in the same slot.

Specifically, when the first feedback timing and the second feedback timing are independently configured (the first feedback timing is independent of the second feedback timing), the first feedback timing is pre-configured by higher-layer signaling, or is indicated by the aperiodic CSI feedback timing indication field in the downlink DCI.

When the first feedback timing and the second feedback timing are the same, the first feedback timing is indicated by the HARQ-ACK feedback timing indication field in the downlink DCI. At this time, the first PUCCH resource is different from the second PUCCH resource.

In some embodiments of the present disclosure, the first PUCCH resource is configured by higher layer signaling, or is indicated by an aperiodic CSI PUCCH resource indication field in the downlink DCI,
or is indicated by the HARQ-ACK resource indication field in the downlink DCI.

Specifically, when the first PUCCH resource and the second PUCCH resource are independently configured (the first PUCCH resource is independent of the second PUCCH resource), the first PUCCH resource is configured by higher layer signaling, or is indicated by an aperiodic CSI PUCCH resource indication field in the downlink DCI. When the first PUCCH resource is indicated by the aperiodic CSI PUCCH resource indication field in the downlink DCI, the aperiodic CSI PUCCH resource indication field in the downlink DCI can directly indicate all relevant parameters of the PUCCH resource, or can indicate one PUCCH resource in a PUCCH resource set pre-configured by higher layer signaling. Specifically, the indication of one PUCCH resource can be realized by indicating a number of a PUCCH resource in the PUCCH resource set.

When the first PUCCH resource and the second PUCCH resource are the same, the first PUCCH resource is indicated by the HARQ-ACK resource indication field in the downlink DCI. At this time, the first feedback timing and the second feedback timing need to be different.

Further, the transmitting the aperiodic CSI on the first transmission resource and transmitting the HARQ-ACK on the second transmission resource includes:
transmitting the aperiodic CSI on a first PUCCH resource, and transmitting the HARQ-ACK on a second PUCCH resource;
wherein, the first PUCCH resource and the second PUCCH resource are in a same slot, and do not overlap in time domain;
   or,
the first PUCCH resource and the second PUCCH resource are in different slots.

In the information transmission method according to some embodiments of the present disclosure, downlink downlink control information (DCI) is received, wherein the downlink DCI includes an aperiodic channel state information (CSI) trigger information field; when the aperiodic CSI trigger information field in the downlink DCI indicates that aperiodic CSI is to be reported, a first transmission resource for the aperiodic CSI and a second transmission resource for a hybrid automatic repeat request acknowledgement (HARQ-ACK) corresponding to the downlink DCI are determined; the aperiodic CSI is transmitted on the first transmission resource, and the HARQ-ACK is transmitted on the second transmission resource. Some embodiments of the present disclosure perform independent transmission of aperiodic CSI and HARQ-ACK, which can effectively avoid the impact on the transmission content of PUCCH carrying HARQ-ACK when the terminal fails to detect the DCI triggering the aperiodic report, and effectively improves system performance and transmission efficiency.

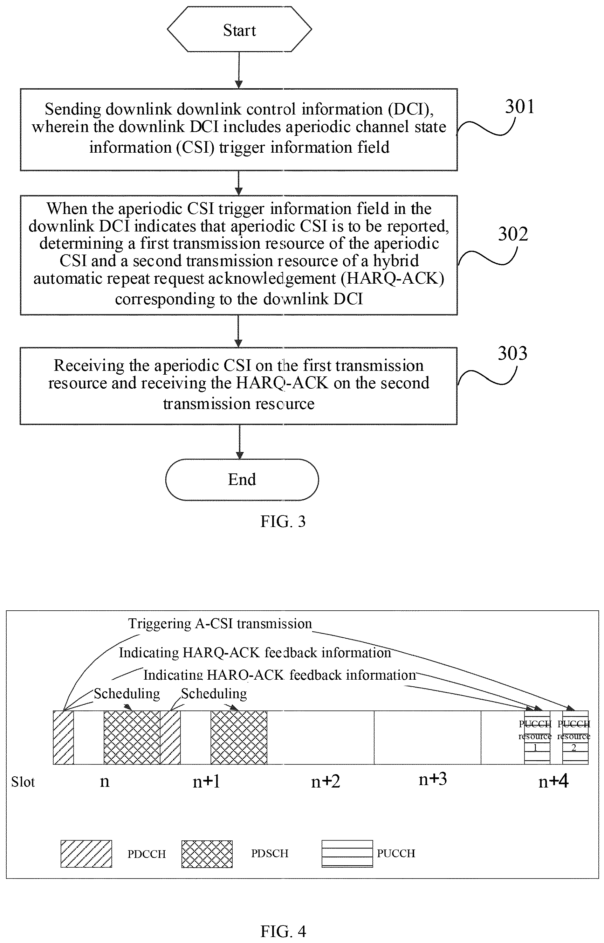

As shown in FIG. 3, some embodiments of the present disclosure further provide an information transmission method applied to a network device, including a step 301, a step 302 and a step 303.

Step 301: sending downlink downlink control information (DCI), wherein the downlink DCI includes an aperiodic channel state information (CSI) trigger information field.

Here, the aperiodic CSI trigger information field in the downlink DCI is used to indicate whether the terminal is to report aperiodic CSI (A-CSI).

In some embodiments of the present disclosure, the downlink DCI is at least one of the following:
DCI indicating semi-persistent scheduling (SPS) physical downlink shared channel (PDSCH) release;
DCI scheduling PDSCH transmission.

Further, when the downlink DCI is the DCI indicating the SPS PDSCH release, the HARQ-ACK corresponding to the downlink DCI is an HARQ-ACK corresponding to the DCI indicating the SPS PDSCH release;
when the downlink DCI is the DCI scheduling PDSCH transmission, the HARQ-ACK corresponding to the downlink DCI is an HARQ-ACK of the PDSCH scheduled by the downlink DCI.

Step 302: when the aperiodic CSI trigger information field in the downlink DCI indicates that aperiodic CSI is to be reported, determining a first transmission resource for the aperiodic CSI and a second transmission resource for a hybrid automatic repeat request acknowledgement (HARQ-ACK) corresponding to the downlink DCI.

Here, the first transmission resource and the second transmission resource are two independently configured transmission resources. The network device determines the transmission resource for the aperiodic CSI and the transmission resource for the HARQ-ACK corresponding to the downlink DCI separately, so as to realize independent transmission of the aperiodic CSI and the HARQ-ACK corresponding to the downlink DCI. The independent configuration here is at least manifested as the independent configuration of one of feedback timing and specific resource. The other of feedback timing and specific resource can be independently configured as well, but of course its configuration can be shared, that is, have same configuration.

Step 303: receiving the aperiodic CSI on the first transmission resource, and receiving the HARQ-ACK on the second transmission resource.

In the information transmission method of some embodiments of the present disclosure, downlink downlink control information (DCI) is transmitted, wherein the downlink DCI includes an aperiodic channel state information (CSI) trigger information field; when the aperiodic CSI trigger information field in the downlink DCI indicates that aperiodic CSI is to be reported, a first transmission resource for the aperiodic CSI and a second transmission resource for a hybrid automatic repeat request acknowledgement (HARQ-ACK) corresponding to the downlink DCI are determined; the aperiodic CSI is received on the first transmission resource, and the HARQ-ACK is received on the second transmission resource. Some embodiments of the present disclosure perform independent transmission of aperiodic CSI and HARQ-ACK, which can effectively avoid the impact on the transmission content of PUCCH carrying HARQ-ACK when the terminal fails to detect the DCI triggering the aperiodic report, and effectively improves system performance and transmission efficiency.

Further, the determining a first transmission resource for the aperiodic CSI in the above Step 302 includes:
determining a first feedback timing of the aperiodic CSI and a first physical uplink control channel PUCCH resource for transmitting the aperiodic CSI;
the determining a second transmission resource for HARQ-ACK corresponding to the downlink DCI in the above Step 302 includes:
   determining a second feedback timing of the HARQ-ACK and a second physical uplink control channel PUCCH resource for transmitting the HARQ-ACK;
   wherein, the first feedback timing is different from the second feedback timing, and/or the first PUCCH resource is different from the second PUCCH resource.

The first feedback timing being different from the second feedback timing may refer to that the first feedback timing and the second feedback timing are in different slots, or in non-overlapping symbols of a same slot, such as, in a first half of a slot and a second half of the slot. The first PUCCH resource being different from the second PUCCH resource may refer to that the first PUCCH resource and the second PUCCH resource do not overlap in the time domain, and the non-overlap may be manifested as not being in the same slot, or manifested as being in non-overlapping symbols of a same slot.

Specifically, the first feedback timing is an interval between a first time domain resource of downlink DCI triggering the aperiodic CSI and a second time domain resource for transmitting the aperiodic CSI.

The first time domain resource is a slot in which downlink DCI triggering the aperiodic CSI is transmitted, and the second time domain resource is a slot in which the PUCCH for transmitting the aperiodic CSI is transmitted; at this time, the above interval is the slot interval between the slot in which the downlink DCI triggering the aperiodic CSI is transmitted and the slot in which the PUCCH transmitting the aperiodic CSI is transmitted. For example, it may be defined that the downlink DCI is in a slot n, if the aperiodic CSI trigger information field in the downlink DCI indicates that aperiodic CSI needs to be reported, the aperiodic CSI is reported in a slot n+k, wherein k is the first feedback timing.

Or, the first time domain resource is a last symbol of the downlink DCI triggering the aperiodic CSI, and the second time domain resource is a first symbol of the PUCCH transmitting the aperiodic CSI. At this time, the interval is a symbol interval between the last symbol of the downlink DCI triggering the aperiodic CSI and the first symbol of the PUCCH transmitting the aperiodic CSI.

In some embodiments of the present disclosure, the first feedback timing is pre-configured by higher layer signaling, or is indicated by an aperiodic CSI feedback timing indication field in the downlink DCI; when the first feedback timing is indicated by the aperiodic CSI feedback timing indication field in the downlink DCI, the aperiodic CSI feedback timing indicator field in the downlink DCI can directly indicate a first feedback timing value. Of course, the aperiodic CSI feedback timing indicator field can also indicate a value in the first feedback timing set pre-configured by higher layer signaling, for example, indicate a feedback timing value by indicating the number of each value in the pre-configured first feedback timing set.

Or, the first feedback timing is indicated by an HARQ-ACK feedback timing indication field in the downlink DCI. This case is equivalent to that the first feedback timing and the second feedback timing are the same. For example, the aperiodic CSI and the HARQ-ACK corresponding to the downlink DCI are transmitted in the same slot.

Specifically, when the first feedback timing and the second feedback timing are independently configured (the first feedback timing is independent of the second feedback timing), the first feedback timing is pre-configured by higher-layer signaling, or is indicated by the aperiodic CSI feedback timing indication field in the downlink DCI.

When the first feedback timing and the second feedback timing are the same, the first feedback timing is indicated by the HARQ-ACK feedback timing indication field in the downlink DCI. At this time, the first PUCCH resource is different from the second PUCCH resource.

In some embodiments of the present disclosure, the first PUCCH resource is configured by higher layer signaling, or is indicated by an aperiodic CSI PUCCH resource indication field in the downlink DCI,
or is indicated by the HARQ-ACK resource indication field in the downlink DCI.

Specifically, when the first PUCCH resource and the second PUCCH resource are independently configured (the first PUCCH resource is independent of the second PUCCH resource), the first PUCCH resource is configured by higher layer signaling, or is indicated by an aperiodic CSI PUCCH resource indication field in the downlink DCI. When the first PUCCH resource is indicated by the aperiodic CSI PUCCH resource indication field in the downlink DCI, the aperiodic CSI PUCCH resource indication field in the downlink DCI can directly indicate all relevant parameters of the PUCCH resource, or can indicate one PUCCH resource in a PUCCH resource set pre-configured by higher layer signaling. Specifically, the indication of one PUCCH resource can be realized by indicating the number of a PUCCH resource in the PUCCH resource set. When the first PUCCH resource and the second PUCCH resource are the same, the first PUCCH resource is indicated by the HARQ-ACK resource indication field in the downlink DCI. At this time, the first feedback timing and the second feedback timing need to be different.

Further, the receiving the aperiodic CSI on the first transmission resource and receiving the HARQ-ACK on the second transmission resource, includes:
receiving the aperiodic CSI on a first PUCCH resource, and receiving the HARQ-ACK on a second PUCCH resource;
wherein, the first PUCCH resource and the second PUCCH resource are in a same slot, and do not overlap in the time domain;
   or,
the first PUCCH resource and the second PUCCH resource are in different slots.

In the information transmission method according to some embodiments of the present disclosure, downlink downlink control information (DCI) is transmitted, wherein the downlink DCI includes an aperiodic channel state information (CSI) trigger information field; when the aperiodic CSI trigger information field in the downlink DCI indicates that aperiodic CSI is to be reported, a first transmission resource for the aperiodic CSI and a second transmission resource for a hybrid automatic repeat request acknowledgement (HARQ-ACK) corresponding to the downlink DCI are determined; the aperiodic CSI is received on the first transmission resource, and the HARQ-ACK is received on the second transmission resource. Some embodiments of the present disclosure perform independent transmission of aperiodic CSI and HARQ-ACK, which can effectively avoid the impact on the transmission content of PUCCH carrying HARQ-ACK when the terminal fails to detect the DCI triggering the aperiodic report, and effectively improves system performance and transmission efficiency.

The information transmission methods of some embodiments of the present disclosure will be described below in conjunction with specific embodiments.

### Embodiment I:

As shown in Figure 4, assuming that the base station uses same-slot scheduling, the base station sends DCI in slot n (the DCI transmission is carried on the PDCCH), the DCI schedules the PDSCH transmission in slot n, and the HARQ-ACK timing indication field in the DCI indicates that the HARQ-ACK feedback timing is 4, that is, the HARQ-ACK feedback information of the PDSCH in slot n needs to be transmitted in slot n+4, and the HARQ-ACK PUCCH resource indication field in the DCI indicates the specific PUCCH resource in slot n+4 (e.g., PUCCH resource 1 in FIG. 4), such as time domain start symbol, transmission symbol length, frequency domain resource location and other information. At the same time, the DCI includes an aperiodic CSI trigger field, and when the base station indicates through the aperiodic CSI trigger field that the terminal needs to perform aperiodic CSI feedback, the following manners can be specifically implemented.

Manner 1: it is pre-agreed that the feedback timing of aperiodic CSI is determined according to the HARQ-ACK feedback timing, that is, the feedback timing of aperiodic CSI (A-CSI) is the same as the feedback timing of HARQ-ACK. At this time, the feedback timing of aperiodic CSI can be determined in the way of determining the HARQ-ACK feedback timing, that is, it is always assumed that aperiodic CSI and HARQ-ACK are transmitted in the same slot, and no additional signaling is needed to indicate the feedback timing of aperiodic CSI; moreover, the base station pre-configures through higher layer signaling a PUCCH resource carrying aperiodic CSI in a slot (e.g., PUCCH resource 2 in FIG. 4), and when indicating the PUCCH resource for HARQ-ACK, the base station ensures that the PUCCH resource for HARQ-ACK does not overlap in the time domain with the PUCCH resource carrying aperiodic CSI in slot n+4 that is pre-configured by higher layer signaling.

Manner 2: it is pre-agreed that the feedback timing of aperiodic CSI is determined according to the HARQ-ACK feedback timing, that is, the feedback timing of aperiodic CSI is the same as the feedback timing of HARQ-ACK. At this time, the feedback timing of aperiodic CSI can be determined in the way of determining the HARQ-ACK feedback timing, that is, it is always assumed that aperiodic CSI and HARQ-ACK are transmitted in the same slot, and no additional signaling is needed to indicate the feedback timing of aperiodic CSI; and the DCI contains a PUCCH resource indication field corresponding to aperiodic CSI, which is used to indicate the PUCCH resource carrying aperiodic CSI in a slot (e.g., PUCCH resource 2 in FIG. 4), the PUCCH resource 2 may be a PUCCH resource selected, according to the corresponding indication field in the DCI, from a plurality of PUCCH resources for carrying aperiodic CSI that are pre-configured by higher layer signaling, and when indicating the PUCCH resources of HARQ-ACK and aperiodic CSI, the base station ensures that the two do not overlap in the time domain.

Manner 3: the base station pre-configures the feedback timing of aperiodic CSI through higher layer signaling, for example, configures the feedback timing to 4 (that is, the same as the HARQ-ACK feedback timing), that is, indicates that the terminal is to perform aperiodic CSI feedback in slot n+4, and the base station pre-configures a PUCCH resource carrying aperiodic CSI in a slot through higher layer signaling (e.g., PUCCH resource 2 in FIG. 4), and when indicating the PUCCH resource for HARQ-ACK, the base station ensures that the PUCCH resource for HARQ-ACK does not overlap in the time domain with the PUCCH resource carrying aperiodic CSI in slot n+4 that is pre-configured by higher layer signaling.

Manner 4: the base station pre-configures the feedback timing of aperiodic CSI through higher layer signaling, for example, configures the feedback timing to 4, that is, indicates that the terminal is to perform aperiodic CSI feedback in slot n+4, and the DCI contains a PUCCH resource indication field corresponding to aperiodic CSI, which is used to indicate the PUCCH resource carrying aperiodic CSI in a slot (e.g., PUCCH resource 2 in FIG. 4), the PUCCH resource 2 may be a PUCCH resource selected, according to the corresponding indication field in the DCI, from a plurality of PUCCH resources for carrying aperiodic CSI that are pre-configured by higher layer signaling, and when indicating the PUCCH resources of HARQ-ACK and aperiodic CSI, the base station ensures that the two do not overlap in the time domain.

Manner 5: the DCI includes the feedback time domain indication field corresponding to aperiodic CSI, for example, the base station indicates that the feedback timing of the aperiodic CSI is 4 through the feedback time domain indication field corresponding to the aperiodic CSI in the DCI, that is, indicates that the terminal is to perform aperiodic CSI feedback in slot n+4, and the base station pre-configures a PUCCH resource carrying aperiodic CSI in a slot through higher layer signaling (e.g., PUCCH resource 2 in FIG. 4), and when indicating the PUCCH resource for HARQ-ACK, the base station ensures that the PUCCH resource for HARQ-ACK does not overlap in the time domain with the PUCCH resource carrying aperiodic CSI in slot n+4 that is pre-configured by higher layer signaling.

Manner 6: the DCI includes the feedback time domain indication field corresponding to aperiodic CSI, for example, the base station indicates that the feedback timing of the aperiodic CSI is 4 through the feedback time domain indication field corresponding to the aperiodic CSI in the DCI, that is, indicates that the terminal is to perform aperiodic CSI feedback in slot n+4, and the DCI further contains a PUCCH resource indication field corresponding to aperiodic CSI, which is used to indicate the PUCCH resource carrying aperiodic CSI in a slot (e.g., PUCCH resource 2 in FIG. 4), the PUCCH resource 2 may be a PUCCH resource selected, according to the corresponding indication field in the DCI, from a plurality of PUCCH resources for carrying aperiodic CSI that are pre-configured by higher layer signaling, and when indicating the PUCCH resources of HARQ-ACK and aperiodic CSI, the base station ensures that the two do not overlap in the time domain.

According to the above corresponding manners, the terminal can determine to transmit the HARQ-ACK on PUCCH resource 1 in slot n+4, and determine to transmit the aperiodic CSI on PUCCH resource 2 in slot n+4; in the same way, the base station can determine to receive HARQ-ACK on PUCCH resource 1 in slot n+4, and determine to receive aperiodic CSI on PUCCH resource 2 in slot n+4. Although PUCCH resource 1 and PUCCH resource 2 are in the same slot, because PUCCH resource 1 and PUCCH resource 2 do not overlap in the time domain and are independent PUCCH transmission, independent transmission of HARQ-ACK and aperiodic CSI is realized.

At this time, if HARQ-ACK of another PDSCH scheduled by DCI needs to be multiplexed with the HARQ-ACK of this PDSCH in the same PUCCH transmission, as shown in FIG. 4, there is also a PDSCH scheduled by DCI in slot n+1 that needs HARQ-ACK feedback in slot n+4, if aperiodic CSI and HARQ-ACK are transmitted on the same PUCCH (for example, both are transmitted on PUCCH resource 1), when the DCI triggering aperiodic CSI is received, the aperiodic CSI and the HARQ-ACKs of the two PDSCHs are transmitted on the PUCCH; when the DCI triggering the aperiodic CSI is not received, only the HARQ-ACKs of the two PDSCHs are transmitted on the PUCCH. Therefore, whether the DCI triggering the aperiodic CSI is received will affect the transmission content of the PUCCH carrying HARQ-ACK, resulting in a deterioration of the HARQ-ACK detection performance of the base station. In some embodiments of the present disclosure, the aperiodic CSI and HARQ-ACK are transmitted independently, so as to avoid affecting the transmission content on the PUCCH resource carrying HARQ-ACK because of the loss of the DCI triggering the aperiodic CSI in the slot n.

### Embodiment II:

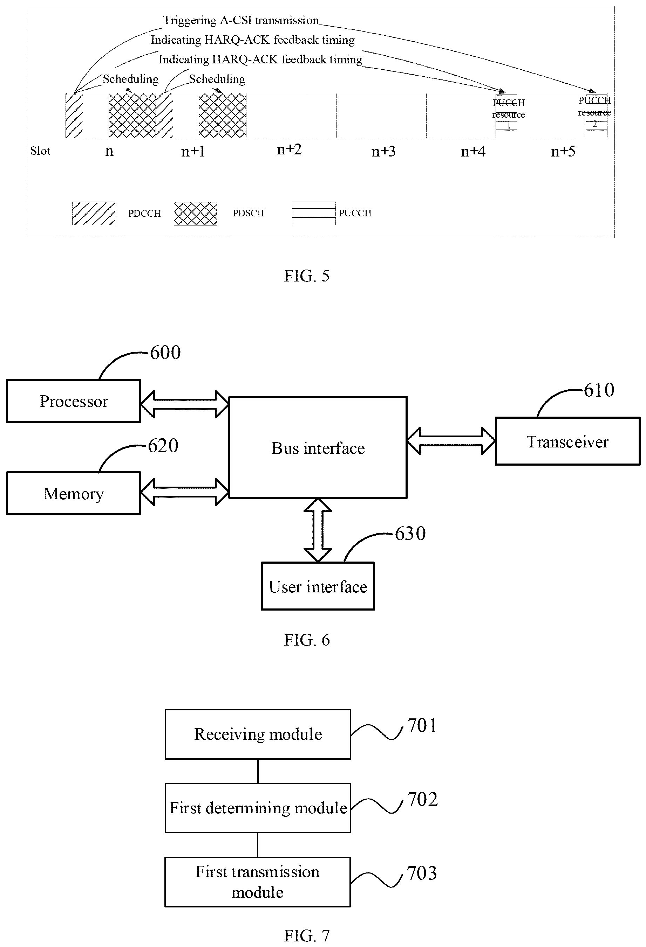

Assuming that the base station uses same-slot scheduling, the base station sends DCI in slot n (the DCI transmission is carried on the PDCCH), the DCI schedules the PDSCH transmission in slot n, and the HARQ-ACK timing indication field in the DCI indicates that the HARQ-ACK feedback timing is 4, that is, the HARQ-ACK feedback information of the PDSCH in slot n needs to be transmitted in slot n+4, and the HARQ-ACK PUCCH resource indication field in the DCI indicates the specific PUCCH resource in slot n+4 (e.g., PUCCH resource 1 in FIG. 5), such as time domain start symbol, transmission symbol length, frequency domain resource location and other information. At the same time, the DCI includes an aperiodic CSI trigger field, and the base station indicates through the aperiodic CSI trigger field to the terminal that aperiodic CSI feedback needs to be performed, the following manners can be specifically implemented.

Manner 1: the base station pre-configures the aperiodic CSI feedback timing through higher layer signaling, for example, the aperiodic CSI feedback timing is configured to 5 (that is, it is different from the HARQ-ACK feedback timing, specifically, the base station can dynamically adjust the HARQ-ACK feedback timing so that the HARQ-ACK is in a different slot from the aperiodic CSI), that is, the base station indicates that the terminal is to perform aperiodic CSI feedback in slot n+5, which is different from the slot of HARQ-ACK feedback; and it is pre-agreed that the PUCCH resource for the aperiodic CSI is determined in the way of determining the PUCCH resource for HARQ-ACK, that is, the start symbol, transmission length, and frequency domain resource, etc. of the PUCCH resource for aperiodic CSI in the slot in which the aperiodic CSI is transmitted are the same as those of the PUCCH resource for HARQ-ACK (e.g., PUCCH resource 2 in Fig. 5, that is, at this time, PUCCH resource 1 and PUCCH resource 2 have the same start position, length, frequency domain resources and the like in the respective slots). Due to the different slots, the PUCCH resource carrying aperiodic CSI and the PUCCH resource carrying HARQ-ACK naturally do not overlap in the time domain.

Manner 2: the base station pre-configures the aperiodic CSI feedback timing through higher layer signaling, for example, configures the aperiodic CSI feedback timing to 5 (that is, it is different from the HARQ-ACK feedback timing, specifically, the base station can dynamically adjust the HARQ-ACK feedback timing so that the HARQ-ACK is in a different slot from the aperiodic CSI), that is, the base station indicates that the terminal is to perform aperiodic CSI feedback in slot n+5, which is different from the slot of HARQ-ACK feedback; and the base station pre-configures through higher layer signaling a PUCCH resource carrying aperiodic CSI in a slot (e.g., PUCCH resource 2 in FIG. 5), due to the different slots, the PUCCH resource carrying aperiodic CSI and the PUCCH resource carrying HARQ-ACK naturally do not overlap in the time domain.

Manner 3: the base station pre-configures the aperiodic CSI feedback timing through higher layer signaling, for example, configures the aperiodic CSI feedback timing to 5 (that is, it is different from the HARQ-ACK feedback timing, specifically, the base station can dynamically adjust the HARQ-ACK feedback timing so that the HARQ-ACK is in a different slot from the aperiodic CSI), that is, the base station indicates that the terminal is to perform aperiodic CSI feedback in slot n+5, which is different from the slot of HARQ-ACK feedback; and the DCI contains a PUCCH resource indication field corresponding to aperiodic CSI, which is used to indicate the PUCCH resource carrying aperiodic CSI in a slot (e.g., PUCCH resource 2 in FIG. 5), the PUCCH resource 2 may be a PUCCH resource selected, according to the corresponding indication field in the DCI, from a plurality of PUCCH resources for carrying aperiodic CSI that are pre-configured by higher layer signaling; due to the different slots, the PUCCH resource carrying aperiodic CSI and the PUCCH resource carrying HARQ-ACK naturally do not overlap in the time domain.

Manner 4: the DCI includes the feedback time domain indication field corresponding to aperiodic CSI, for example, the base station indicates that the feedback timing of the aperiodic CSI is 5 through the feedback time domain indication field corresponding to the aperiodic CSI in the DCI, that is, the base station indicates that the terminal is to perform aperiodic CSI feedback in slot n+5, which is different from the slot of HARQ-ACK feedback; and it is pre-agreed that the PUCCH resource for the aperiodic CSI is determined in the way of determining the PUCCH resource for HARQ-ACK, that is, the start symbol, transmission length, and frequency domain resource, etc. of the PUCCH resource for aperiodic CSI in the slot in which the aperiodic CSI is transmitted are the same as those of the PUCCH resource for HARQ-ACK (e.g., PUCCH resource 2 in Fig. 5, that is, at this time, PUCCH resource 1 and PUCCH resource 2 have the same start position, length, frequency domain resources and the like in the respective slots). Due to the different slots, the PUCCH resource carrying aperiodic CSI and the PUCCH resource carrying HARQ-ACK naturally do not overlap in the time domain.

Manner 5: the DCI includes the feedback time domain indication field corresponding to aperiodic CSI, for example, the base station indicates that the feedback timing of the aperiodic CSI is 5 through the feedback time domain indication field corresponding to the aperiodic CSI in the DCI, that is, the base station indicates that the terminal is to perform aperiodic CSI feedback in slot n+5, which is different from the slot of HARQ-ACK feedback; and the base station pre-configures a PUCCH resource (e.g., PUCCH resource 2 in FIG. 5) carrying aperiodic CSI in a slot through higher layer signaling; due to the different slots, the PUCCH resource carrying aperiodic CSI and the PUCCH resource carrying HARQ-ACK naturally do not overlap in the time domain.

Manner 6: the DCI includes the feedback time domain indication field corresponding to aperiodic CSI, for example, the base station indicates that the feedback timing of the aperiodic CSI is 5 through the feedback time domain indication field corresponding to the aperiodic CSI in the DCI, that is, the base station indicates that the terminal is to perform aperiodic CSI feedback in slot n+5, which is different from the slot of HARQ-ACK feedback; and the DCI contains a PUCCH resource indication field corresponding to aperiodic CSI, which is used to indicate the PUCCH resource carrying aperiodic CSI in a slot (e.g., PUCCH resource 2 in FIG. 5), the PUCCH resource 2 may be a PUCCH resource selected, according to the corresponding indication field in the DCI, from a plurality of PUCCH resources for carrying aperiodic CSI that are pre-configured by higher layer signaling; due to the different slots, the PUCCH resource carrying aperiodic CSI and the PUCCH resource carrying HARQ-ACK naturally do not overlap in the time domain.

According to the above corresponding manners, the terminal can determine to transmit the HARQ-ACK on PUCCH resource 1 in slot n+4, and determine to transmit the aperiodic CSI on PUCCH resource 2 in slot n+5; in the same way, the base station can determine to receive HARQ-ACK on PUCCH resource 1 in slot n+4, and determine to receive aperiodic CSI on PUCCH resource 2 in slot n+5. Since PUCCH resource 1 and PUCCH resource 2 are in different slots, it is obvious that they never overlap in the time domain, and are independent PUCCH transmission, that is, independent transmission of HARQ-ACK and aperiodic CSI are realized. At this time, if HARQ-ACK of another PDSCH scheduled by DCI needs to be multiplexed with the HARQ-ACK of this PDSCH in the same PUCCH transmission, as shown in FIG. 5, there is also a PDSCH scheduled by DCI in slot n+1 that needs HARQ-ACK feedback in slot n+4, if aperiodic CSI and HARQ-ACK are transmitted on the same PUCCH (for example, both are transmitted on PUCCH resource 1 in the slot n+4), when the DCI triggering aperiodic CSI is received, the aperiodic CSI and the HARQ-ACKs of the two PDSCHs are transmitted on the PUCCH; when the DCI triggering the aperiodic CSI is not received, only the HARQ-ACKs of the two PDSCHs are transmitted on the PUCCH. Therefore, whether the DCI triggering the aperiodic CSI is received will affect the transmission content of the PUCCH carrying HARQ-ACK, resulting in a deterioration of the HARQ-ACK detection performance of the base station. In some embodiments of the present disclosure, the aperiodic CSI and HARQ-ACK are transmitted independently, so as to avoid affecting the transmission content on the PUCCH resource carrying HARQ-ACK because of the loss of the DCI triggering the aperiodic CSI in the slot n.

In the above embodiments, feedback timing is defined by taking slot as an example of the unit of feedback timing. The same is applicable when the feedback timing is defined in units of other durations, for example, mini-slot, half slot, etc.

The embodiment of FIG. 6 is not covered by the claimed invention.

As shown in FIG. 6, an embodiment of the present disclosure further provides a terminal including: a transceiver, a memory, a processor, and a computer program stored in the memory and executable by the processor; wherein the processor is configured to execute the computer program to implement following steps:
receiving downlink downlink control information (DCI), wherein the downlink DCI includes aperiodic channel state information (CSI) trigger information field;
when the aperiodic CSI trigger information field in the downlink DCI indicates that aperiodic CSI is to be reported, determining a first transmission resource for the aperiodic CSI and a second transmission resource for a hybrid automatic repeat request acknowledgement HARQ-ACK corresponding to the downlink DCI;
transmitting the aperiodic CSI on the first transmission resource and transmitting the HARQ-ACK on the second transmission resource.

In FIG. 6, a bus architecture may include any quantity of interconnected buses and bridges, and connects various circuits including one or more processors represented by the processor 600 and a memory represented by the memory 620. The bus architecture may also connect various other circuits such as peripherals, voltage regulators and power management circuits, which is well known in the art. Therefore, a detailed description thereof is omitted herein. The bus interface provides interfaces. The transceiver 610 may be multiple elements, that is, includes a transmitter and a receiver, to provide units for communicating with various other apparatuses on the transmission medium. For different user equipment, the user interface 630 can also be an interface capable of externally/internally connecting the required devices, which including but not limited to: a keypad, a display, a speaker, a microphone, a joystick, and the like.

The processor 600 is responsible for managing the bus architecture and general processing, and the memory 620 can store data used by the processor 600 when performing operations.

Optionally, the downlink DCI is at least one of the following:
DCI indicating semi-persistent scheduling (SPS) physical downlink shared channel (PDSCH) release;
DCI scheduling PDSCH transmission.

Optionally, when the downlink DCI is the DCI indicating the SPS PDSCH release, HARQ-ACK corresponding to the downlink DCI is HARQ-ACK corresponding to the DCI indicating the SPS PDSCH release;
when the downlink DCI is the DCI scheduling PDSCH transmission, HARQ-ACK corresponding to the downlink DCI is HARQ-ACK of the PDSCH scheduled by the downlink DCI.

Optionally, the processor 600 is further configured to read the program in the memory 620 to perform the following step:
determining a first feedback timing of the aperiodic CSI and a first physical uplink control channel PUCCH resource for transmitting the aperiodic CSI.

Optionally, the processor 600 is further configured to read the program in the memory 620 to perform the following step:
determining a second feedback timing of the HARQ-ACK and a second physical uplink control channel (PUCCH) resource for transmitting the HARQ-ACK;
wherein, the first feedback timing is different from the second feedback timing, and/or the first PUCCH resource is different from the second PUCCH resource.

Optionally, the first feedback timing is an interval between a first time domain resource of downlink DCI triggering the aperiodic CSI and a second time domain resource for transmitting the aperiodic CSI.

Optionally, the first time domain resource is a slot in which downlink DCI triggering the aperiodic CSI is transmitted, and the second time domain resource is a slot in which the PUCCH for transmitting the aperiodic CSI is transmitted;
or, the first time domain resource is a last symbol of the downlink DCI triggering the aperiodic CSI, and the second time domain resource is a first symbol of the PUCCH transmitting the aperiodic CSI.

Optionally, the first feedback timing is pre-configured by higher layer signaling, or is indicated by an aperiodic CSI feedback timing indication field in the downlink DCI,
or is indicated by an HARQ-ACK feedback timing indication field in the downlink DCI.

Optionally, the first PUCCH resource is configured by higher layer signaling, or is indicated by an aperiodic CSI PUCCH resource indication field in the downlink DCI,
or is indicated by the HARQ-ACK resource indication field in the downlink DCI.

Optionally, the processor 600 is further configured to read the program in the memory 620 to perform the following steps:
transmitting the aperiodic CSI on a first PUCCH resource, and transmitting the HARQ-ACK on a second PUCCH resource;
wherein, the first PUCCH resource and the second PUCCH resource are in a same slot, and do not overlap in the time domain;
or, the first PUCCH resource and the second PUCCH resource are in different slots.

The terminal according to some embodiments of the present disclosure receives downlink downlink control information (DCI), wherein the downlink DCI includes aperiodic channel state information (CSI) trigger information field; when the aperiodic CSI trigger information field in the downlink DCI indicates that aperiodic CSI is to be reported, the terminal determines a first transmission resource for the aperiodic CSI and a second transmission resource for a hybrid automatic repeat request acknowledgement (HARQ-ACK) corresponding to the downlink DCI; the terminal transmits the aperiodic CSI on the first transmission resource, and transmits the HARQ-ACK on the second transmission resource. Some embodiments of the present disclosure perform independent transmission of aperiodic CSI and HARQ-ACK, which can effectively avoid the impact on the transmission content of PUCCH carrying HARQ-ACK when the terminal fails to detect the DCI triggering the aperiodic report, and effectively improves system performance and transmission efficiency.

Some embodiments of the present disclosure further provide a computer readable storage medium, where a computer program is stored in the computer readable storage medium, when the computer program is executed by a processor, the following steps are implemented:
receiving downlink downlink control information (DCI), wherein the downlink DCI includes aperiodic channel state information (CSI) trigger information field;
when the aperiodic CSI trigger information field in the downlink DCI indicates that aperiodic CSI is to be reported, determining a first transmission resource for the aperiodic CSI and a second transmission resource for a hybrid automatic repeat request acknowledgement HARQ-ACK corresponding to the downlink DCI;
transmitting the aperiodic CSI on the first transmission resource and transmitting the HARQ-ACK on the second transmission resource.

When the program is executed by the processor, all implementations in the above-mentioned embodiments of information transmission method applied to the terminal side may be achieved, and the same technical effects may be achieved. To avoid repetition, details thereof are not described here.

As shown in FIG. 7, some embodiments of the present disclosure further provide a terminal, including:
a receiving module 701, configured to receive downlink downlink control information (DCI), wherein the downlink DCI includes aperiodic channel state information (CSI) trigger information field;
a first determining module 702, configured to, when the aperiodic CSI trigger information field in the downlink DCI indicates that aperiodic CSI is to be reported, determine a first transmission resource for the aperiodic CSI and a second transmission resource for a hybrid automatic repeat request acknowledgement HARQ-ACK corresponding to the downlink DCI;
a first transmission module 703, configured to transmit the aperiodic CSI on the first transmission resource and transmit the HARQ-ACK on the second transmission resource.

In the terminal according to some embodiments of the present disclosure, the downlink DCI is at least one of the following:
DCI indicating semi-persistent scheduling (SPS) physical downlink shared channel (PDSCH) release;
DCI scheduling PDSCH transmission.

In the terminal according to some embodiments of the present disclosure, when the downlink DCI is the DCI indicating the SPS PDSCH release, HARQ-ACK corresponding to the downlink DCI is an HARQ-ACK corresponding to the DCI indicating the SPS PDSCH release;
when the downlink DCI is the DCI scheduling PDSCH transmission, HARQ-ACK corresponding to the downlink DCI is an HARQ-ACK of the PDSCH scheduled by the downlink DCI.

In the terminal according to some embodiments of the present disclosure, the first determining module includes:
a first determining sub-module configured to determine a first feedback timing of the aperiodic CSI and a first physical uplink control channel PUCCH resource for transmitting the aperiodic CSI;
the first determining module further includes:
   a second determining sub-module configured to determine a second feedback timing of the HARQ-ACK and a second physical uplink control channel PUCCH resource for transmitting the HARQ-ACK;
   wherein, the first feedback timing is different from the second feedback timing, and/or the first PUCCH resource is different from the second PUCCH resource.

In the terminal according to some embodiments of the present disclosure, the first feedback timing is an interval between a first time domain resource of downlink DCI triggering the aperiodic CSI and a second time domain resource for transmitting the aperiodic CSI.

In the terminal according to some embodiments of the present disclosure, the first time domain resource is a slot in which downlink DCI triggering the aperiodic CSI is transmitted, and the second time domain resource is a slot in which the PUCCH for transmitting the aperiodic CSI is transmitted;
or, the first time domain resource is a last symbol of the downlink DCI triggering the aperiodic CSI, and the second time domain resource is a first symbol of the PUCCH transmitting the aperiodic CSI.

In the terminal according to some embodiments of the present disclosure, the first feedback timing is pre-configured by higher layer signaling, or is indicated by an aperiodic CSI feedback timing indication field in the downlink DCI,
or is indicated by an HARQ-ACK feedback timing indication field in the downlink DCI.

In the terminal according to some embodiments of the present disclosure, the first PUCCH resource is configured by higher layer signaling, or indicated by an aperiodic CSI PUCCH resource indication field in the downlink DCI,
or is indicated by the HARQ-ACK resource indication field in the downlink DCI.

In the terminal according to some embodiments of the present disclosure, the first transmission module is configured to transmit the aperiodic CSI on the first PUCCH resource, and transmit the HARQ-ACK on the second PUCCH resource;
wherein, the first PUCCH resource and the second PUCCH resource are in a same slot, and do not overlap in the time domain;
   or,
the first PUCCH resource and the second PUCCH resource are in different slots.

The terminal according to some embodiments of the present disclosure receives downlink downlink control information (DCI), wherein the downlink DCI includes aperiodic channel state information (CSI) trigger information field; when the aperiodic CSI trigger information field in the downlink DCI indicates that aperiodic CSI is to be reported, the terminal determines a first transmission resource for the aperiodic CSI and a second transmission resource for a hybrid automatic repeat request acknowledgement (HARQ-ACK) corresponding to the downlink DCI; the terminal transmits the aperiodic CSI on the first transmission resource, and transmits the HARQ-ACK on the second transmission resource. Some embodiments of the present disclosure perform independent transmission of aperiodic CSI and HARQ-ACK, which can effectively avoid the impact on the transmission content of PUCCH carrying HARQ-ACK when the terminal fails to detect the DCI triggering the aperiodic report, and effectively improves system performance and transmission efficiency.

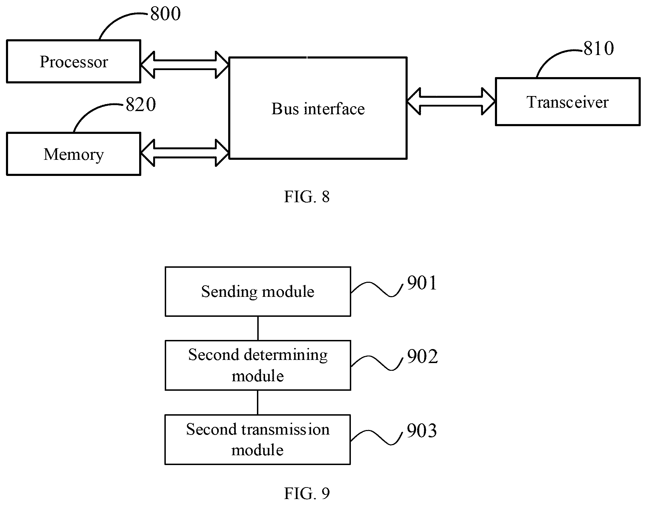

The embodiment of FIG. 8 is not covered by the claimed invention.

As shown in FIG. 8, an embodiment of the present disclosure further provides a network device, the network device may specifically be a base station, and includes: a memory 820, a processor 800, a transceiver 810, a bust interface and a computer program stored in the memory 820 and executable by the processor 800; the processor 800 is configured to read the program in the memory 820 and performs the following process:
sending downlink downlink control information (DCI) by using the transceiver, wherein the downlink DCI includes aperiodic channel state information (CSI) trigger information field;
when the aperiodic CSI trigger information field in the downlink DCI indicates that aperiodic CSI is to be reported, determining a first transmission resource for the aperiodic CSI and a second transmission resource for a hybrid automatic repeat request acknowledgement HARQ-ACK corresponding to the downlink DCI;
receiving the aperiodic CSI on the first transmission resource and receiving the HARQ-ACK on the second transmission resource.

In FIG. 8, a bus architecture may include any quantity of interconnected buses and bridges, and connects various circuits including one or more processors represented by the processor 800 and a memory represented by the memory 820. The bus architecture may also connect various other circuits such as peripherals, voltage regulators and power management circuits, which is well known in the art. Therefore, a detailed description thereof is omitted herein. The bus interface provides interfaces. The transceiver 810 may be multiple elements, that is, includes a transmitter and a receiver, to provide units for communicating with various other apparatuses on the transmission medium. The processor 800 is responsible for managing the bus architecture and general processing, and the memory 820 can store data used by the processor 800 when performing operations.

Optionally, the downlink DCI is at least one of the following:
DCI indicating semi-persistent scheduling (SPS) physical downlink shared channel (PDSCH) release;
DCI scheduling PDSCH transmission.

Optionally, when the downlink DCI is the DCI indicating the SPS PDSCH release, HARQ-ACK corresponding to the downlink DCI is an HARQ-ACK corresponding to the DCI indicating the SPS PDSCH release;
when the downlink DCI is the DCI scheduling PDSCH transmission, HARQ-ACK corresponding to the downlink DCI is an HARQ-ACK of the PDSCH scheduled by the downlink DCI.

Optionally, the processor is further configured to execute the program to implement following step:
determining a first feedback timing of the aperiodic CSI and a first physical uplink control channel (PUCCH) resource for transmitting the aperiodic CSI;
the processor is further configured to execute the program to implement following step:
   determining a second feedback timing of the HARQ-ACK and a second physical uplink control channel (PUCCH) resource for transmitting the HARQ-ACK;
   wherein, the first feedback timing is different from the second feedback timing, and/or the first PUCCH resource is different from the second PUCCH resource.

Optionally, the first feedback timing is an interval between a first time domain resource of downlink DCI triggering the aperiodic CSI and a second time domain resource for transmitting the aperiodic CSI.

Optionally, the first time domain resource is a slot in which downlink DCI triggering the aperiodic CSI is transmitted, and the second time domain resource is a slot in which the PUCCH for transmitting the aperiodic CSI is transmitted;
or, the first time domain resource is a last symbol of the downlink DCI triggering the aperiodic CSI, and the second time domain resource is a first symbol of the PUCCH transmitting the aperiodic CSI.

Optionally, the first feedback timing is pre-configured by higher layer signaling, or is indicated by an aperiodic CSI feedback timing indication field in the downlink DCI,
or is indicated by an HARQ-ACK feedback timing indication field in the downlink DCI.

Optionally, the first PUCCH resource is configured by higher layer signaling, or is indicated by an aperiodic CSI PUCCH resource indication field in the downlink DCI,
or is indicated by the HARQ-ACK resource indication field in the downlink DCI.

Optionally, when the processor 800 executes the program, the following steps are further implemented:
receiving the aperiodic CSI on a first PUCCH resource, and receiving the HARQ-ACK on a second PUCCH resource;
wherein, the first PUCCH resource and the second PUCCH resource are in a same slot, and do not overlap in the time domain;
   or,
the first PUCCH resource and the second PUCCH resource are in different slots.

Some embodiments of the present disclosure further provide a computer readable storage medium, where a computer program is stored in the computer readable storage medium, when the computer program is executed by a processor, the following steps are implemented:
sending downlink downlink control information (DCI), wherein the downlink DCI includes aperiodic channel state information (CSI) trigger information field;
when the aperiodic CSI trigger information field in the downlink DCI indicates that aperiodic CSI is to be reported, determining a first transmission resource for the aperiodic CSI and a second transmission resource for a hybrid automatic repeat request acknowledgement (HARQ-ACK) corresponding to the downlink DCI;
receiving the aperiodic CSI on the first transmission resource, and receiving the HARQ-ACK on the second transmission resource.

When the program is executed by the processor, all implementations in the above-mentioned embodiments of information transmission method applied to the network device side may be achieved, and the same technical effects may be achieved. To avoid repetition, details thereof are not described here.

As shown in FIG. 9, some embodiments of the present disclosure further provide a network device, including:
a sending module 901, configured to send downlink downlink control information (DCI), wherein the downlink DCI includes aperiodic channel state information (CSI) trigger information field;
a second determining module 902, configured to, when the aperiodic CSI trigger information field in the downlink DCI indicates that aperiodic CSI is to be reported, determine a first transmission resource for the aperiodic CSI and a second transmission resource for a hybrid automatic repeat request acknowledgement (HARQ-ACK) corresponding to the downlink DCI;
a second transmission module 903, configured to receive the aperiodic CSI on the first transmission resource and receive the HARQ-ACK on the second transmission resource.

In the network device according to some embodiments of the present disclosure, the downlink DCI is at least one of the following:
DCI indicating semi-persistent scheduling (SPS) physical downlink shared channel (PDSCH) release;
DCI scheduling PDSCH transmission.

In the network device according to some embodiments of the present disclosure, when the downlink DCI is the DCI indicating the SPS PDSCH release, HARQ-ACK corresponding to the downlink DCI is an HARQ-ACK corresponding to the DCI indicating the SPS PDSCH release;
when the downlink DCI is the DCI scheduling PDSCH transmission, HARQ-ACK corresponding to the downlink DCI refers to an HARQ-ACK of the PDSCH scheduled by the downlink DCI.

In the network device according to some embodiments of the present disclosure, the second determining module includes:
a third determining sub-module configured to determine a first feedback timing of the aperiodic CSI and a first physical uplink control channel (PUCCH) resource for transmitting the aperiodic CSI;
the second determining module further includes:
   a fourth determining sub-module configured to determine a second feedback timing of the HARQ-ACK and a second PUCCH resource for transmitting the HARQ-ACK;
   wherein, the first feedback timing is different from the second feedback timing, and/or the first PUCCH resource is different from the second PUCCH resource.

In the network device according to some embodiments of the present disclosure, the first feedback timing is an interval between a first time domain resource of downlink DCI triggering the aperiodic CSI and a second time domain resource for transmitting the aperiodic CSI.

In the network device according to some embodiments of the present disclosure, the first time domain resource is a slot in which downlink DCI triggering the aperiodic CSI is transmitted, and the second time domain resource is a slot in which the PUCCH for transmitting the aperiodic CSI is transmitted;
or, the first time domain resource is a last symbol of the downlink DCI triggering the aperiodic CSI, and the second time domain resource is a first symbol of the PUCCH transmitting the aperiodic CSI.

In the network device according to some embodiments of the present disclosure, the first feedback timing is pre-configured by higher layer signaling, or is indicated by an aperiodic CSI feedback timing indication field in the downlink DCI,
or is indicated by an HARQ-ACK feedback timing indication field in the downlink DCI.

In the network device according to some embodiments of the present disclosure, the first PUCCH resource is configured by higher layer signaling, or is indicated by an aperiodic CSI PUCCH resource indication field in the downlink DCI,
or is indicated by the HARQ-ACK resource indication field in the downlink DCI.

In the network device according to some embodiments of the present disclosure, the second transmission module is configured to transmit the aperiodic CSI on the first PUCCH resource, and transmit the HARQ-ACK on the second PUCCH resource;
wherein, the first PUCCH resource and the second PUCCH resource are in a same slot, and do not overlap in the time domain;
or, the first PUCCH resource and the second PUCCH resource are in different slots.

The network device according to some embodiments of the present disclosure transmits downlink downlink control information (DCI), wherein the downlink DCI includes aperiodic channel state information (CSI) trigger information field; when the aperiodic CSI trigger information field in the downlink DCI indicates that aperiodic CSI is to be reported, the network device determines a first transmission resource for the aperiodic CSI and a second transmission resource for a hybrid automatic repeat request acknowledgement (HARQ-ACK) corresponding to the downlink DCI; the network device receives the aperiodic CSI on the first transmission resource and receives the HARQ-ACK on the second transmission resource. Some embodiments of the present disclosure perform independent transmission of aperiodic CSI and HARQ-ACK, which can effectively avoid the impact on the transmission content of PUCCH carrying HARQ-ACK when the terminal fails to detect the DCI triggering the aperiodic report, and effectively improves system performance and transmission efficiency.

It should be understood that sequence numbers of the foregoing processes do not imply execution sequences of the processes in the embodiments of the present disclosure. The execution sequences of the processes should be determined according to functions and internal logic of the processes, and the sequence numbers should not be construed as any limitation on the implementation processes of the embodiments of this disclosure.

The scope of protection of the invention is defined in the appended set of claims.

## Claims

1. An information transmission method, applied to a terminal, comprising:
receiving(201) downlink downlink control information, DCI, wherein the downlink DCI comprises an aperiodic channel state information, CSI, trigger information field;
when the aperiodic CSI trigger information field in the downlink DCI indicates that aperiodic CSI is to be reported, determining(202) a first transmission resource for the aperiodic CSI and a second transmission resource for a hybrid automatic repeat request acknowledgement, HARQ-ACK, corresponding to the downlink DCI;
transmitting(203) the aperiodic CSI on the first transmission resource and transmitting the HARQ-ACK on the second transmission resource;
wherein when the downlink DCI is the DCI indicating the SPS PDSCH release, the HARQ-ACK corresponding to the downlink DCI is an HARQ-ACK corresponding to the DCI indicating the SPS PDSCH release; or
when the downlink DCI is the DCI scheduling the PDSCH transmission, the HARQ-ACK corresponding to the downlink DCI is an HARQ-ACK of the PDSCH scheduled by the downlink DCI;
wherein,
the determining the first transmission resource for the aperiodic CSI comprises:
determining a first feedback timing of the aperiodic CSI and a first physical uplink control channel, PUCCH, resource for transmitting the aperiodic CSI;
wherein the first feedback timing is an interval between a first time domain resource of downlink DCI triggering the aperiodic CSI and a second time domain resource for transmitting the aperiodic CSI;
the first time domain resource is the last symbol of the downlink DCI triggering the aperiodic CSI, and the second time domain resource is the first symbol of the PUCCH for transmitting the aperiodic CSI.

2. The information transmission method according to claim 1, wherein, the determining the second transmission resource for the HARQ-ACK corresponding to the downlink DCI comprises:
determining a second feedback timing of the HARQ-ACK and a second PUCCH resource for transmitting the HARQ-ACK;
wherein the first feedback timing is different from the second feedback timing, and/or the first PUCCH resource is different from the second PUCCH resource.

3. The information transmission method according to claim 1, wherein the transmitting the aperiodic CSI on the first transmission resource and transmitting the HARQ-ACK on the second transmission resource comprises:
transmitting the aperiodic CSI on a first PUCCH resource and transmitting the HARQ-ACK on a second PUCCH resource;
wherein, the first PUCCH resource and the second PUCCH resource are in a same slot, and do not overlap in time domain;
or,
the first PUCCH resource and the second PUCCH resource are in different slots.

4. The information transmission method according to claim 2, wherein,
the first feedback timing is pre-configured by higher layer signaling, or is indicated by an aperiodic CSI feedback timing indication field in the downlink DCI, or is indicated by an HARQ-ACK feedback timing indication field in the downlink DCI;
and/or,
wherein,
the first PUCCH resource is configured by higher layer signaling, or is indicated by an aperiodic CSI PUCCH resource indication field in the downlink DCI, or is indicated by an HARQ-ACK resource indication field in the downlink DCI.

5. An information transmission method, applied to a network device, comprising:
sending(301) downlink downlink control information, DCI, wherein the downlink DCI comprises an aperiodic channel state information, CSI, trigger information field;
when the aperiodic CSI trigger information field in the downlink DCI indicates that aperiodic CSI is to be reported, determining(302) a first transmission resource for the aperiodic CSI and a second transmission resource for a hybrid automatic repeat request acknowledgement, HARQ-ACK, corresponding to the downlink DCI;
receiving(303) the aperiodic CSI on the first transmission resource and receiving the HARQ-ACK on the second transmission resource;
wherein when the downlink DCI is the DCI indicating the SPS PDSCH release, the HARQ-ACK corresponding to the downlink DCI is an HARQ-ACK corresponding to the DCI indicating the SPS PDSCH release; or
when the downlink DCI is the DCI scheduling the PDSCH transmission, the HARQ-ACK corresponding to the downlink DCI is an HARQ-ACK of the PDSCH scheduled by the downlink DCI;
wherein,
the determining the first transmission resource for the aperiodic CSI comprises:
determining a first feedback timing of the aperiodic CSI and a first physical uplink control channel, PUCCH, resource for transmitting the aperiodic CSI;
wherein the first feedback timing is an interval between a first time domain resource of downlink DCI triggering the aperiodic CSI and a second time domain resource for transmitting the aperiodic CSI;
the first time domain resource is the last symbol of the downlink DCI triggering the aperiodic CSI, and the second time domain resource is the first symbol of the PUCCH for transmitting the aperiodic CSI.

6. The information transmission method according to claim 5, wherein the determining the second transmission resource for the HARQ-ACK corresponding to the downlink DCI comprises:
determining a second feedback timing of the HARQ-ACK and a second PUCCH resource for transmitting the HARQ-ACK;
wherein the first feedback timing is different from the second feedback timing, and/or the first PUCCH resource is different from the second PUCCH resource.

7. The information transmission method according to claim 5, wherein the receiving the aperiodic CSI on the first transmission resource and receiving the HARQ-ACK on the second transmission resource comprises:
receiving the aperiodic CSI on a first PUCCH resource, and receiving the HARQ-ACK on a second PUCCH resource;
wherein,
the first PUCCH resource and the second PUCCH resource are in a same slot, and do not overlap in time domain;
or,
the first PUCCH resource and the second PUCCH resource are in different slots.

8. The information transmission method according to claim 6, wherein,
the first feedback timing is pre-configured by higher layer signaling, or is indicated by an aperiodic CSI feedback timing indication field in the downlink DCI, or is indicated by an HARQ-ACK feedback timing indication field in the downlink DCI;
and/or,
wherein, the first PUCCH resource is configured by higher layer signaling, or is indicated by an aperiodic CSI PUCCH resource indication field in the downlink DCI,
or is indicated by an HARQ-ACK resource indication field in the downlink DCI.

9. A terminal, comprising:
a receiving module(701), configured to receive downlink downlink control information, DCI, wherein the downlink DCI comprises an aperiodic channel state information, CSI, trigger information field;
a first determining module(702), configured to, when the aperiodic CSI trigger information field in the downlink DCI indicates that aperiodic CSI is to be reported, determine a first transmission resource for the aperiodic CSI and a second transmission resource for a hybrid automatic repeat request acknowledgement, HARQ-ACK, corresponding to the downlink DCI;
a first transmission module(703), configured to transmit the aperiodic CSI on the first transmission resource and transmit the HARQ-ACK on the second transmission resource;
wherein when the downlink DCI is the DCI indicating the SPS PDSCH release, the HARQ-ACK corresponding to the downlink DCI is an HARQ-ACK corresponding to the DCI indicating the SPS PDSCH release; or
when the downlink DCI is the DCI scheduling the PDSCH transmission, the HARQ-ACK corresponding to the downlink DCI is an HARQ-ACK of the PDSCH scheduled by the downlink DCI;
wherein the first determining module(702) comprises:
a first determining sub-module configured to determine a first feedback timing of the aperiodic CSI and a first physical uplink control channel, PUCCH, resource for transmitting the aperiodic CSI;
wherein the first feedback timing is an interval between a first time domain resource of downlink DCI triggering the aperiodic CSI and a second time domain resource for transmitting the aperiodic CSI;
the first time domain resource is the last symbol of the downlink DCI triggering the aperiodic CSI, and the second time domain resource is the first symbol of the PUCCH for transmitting the aperiodic CSI.

10. The terminal according to claim 9, wherein the first determining module(702) further comprises:
a second determining sub-module configured to determine a second feedback timing of the HARQ-ACK and a second physical uplink control channel PUCCH resource for transmitting the HARQ-ACK;
wherein, the first feedback timing is different from the second feedback timing, and/or the first PUCCH resource is different from the second PUCCH resource;

11. The terminal according to claim 9, wherein the first transmission module(703) is configured to transmit the aperiodic CSI on the first PUCCH resource, and transmit the HARQ-ACK on the second PUCCH resource;
wherein, the first PUCCH resource and the second PUCCH resource are in a same slot, and do not overlap in the time domain;
or,
the first PUCCH resource and the second PUCCH resource are in different slots.

12. The terminal according to claim 10, wherein,
the first feedback timing is pre-configured by higher layer signaling, or is indicated by an aperiodic CSI feedback timing indication field in the downlink DCI, or is indicated by an HARQ-ACK feedback timing indication field in the downlink DCI;
and/or,
wherein,
the first PUCCH resource is configured by higher layer signaling, or is indicated by an aperiodic CSI PUCCH resource indication field in the downlink DCI, or is indicated by an HARQ-ACK resource indication field in the downlink DCI.

13. A network device, comprising:
a sending module(901), configured to send downlink downlink control information, DCI, wherein the downlink DCI comprises an aperiodic channel state information, CSI, trigger information field;
a second determining module(902), configured to, when the aperiodic CSI trigger information field in the downlink DCI indicates that aperiodic CSI is to be reported, determine a first transmission resource for the aperiodic CSI and a second transmission resource for a hybrid automatic repeat request acknowledgement, HARQ-ACK, corresponding to the downlink DCI;
a second transmission module(903), configured to receive the aperiodic CSI on the first transmission resource and receive the HARQ-ACK on the second transmission resource;
wherein when the downlink DCI is the DCI indicating the SPS PDSCH release, the HARQ-ACK corresponding to the downlink DCI is an HARQ-ACK corresponding to the DCI indicating the SPS PDSCH release; or
when the downlink DCI is the DCI scheduling the PDSCH transmission, the HARQ-ACK corresponding to the downlink DCI is an HARQ-ACK of the PDSCH scheduled by the downlink DCI;
wherein the second determining module(902) comprises:
a third determining sub-module configured to determine a first feedback timing of the aperiodic CSI and a first physical uplink control channel, PUCCH, resource for transmitting the aperiodic CSI;
wherein the first feedback timing is an interval between a first time domain resource of downlink DCI triggering the aperiodic CSI and a second time domain resource for transmitting the aperiodic CSI;
the first time domain resource is the last symbol of the downlink DCI triggering the aperiodic CSI, and the second time domain resource is the first symbol of the PUCCH for transmitting the aperiodic CSI.

14. The network device according to claim 13, wherein the second determining module(902) further comprises:
a fourth determining sub-module configured to determine a second feedback timing of the HARQ-ACK and a second PUCCH resource for transmitting the HARQ-ACK;
wherein, the first feedback timing is different from the second feedback timing, and/or the first PUCCH resource is different from the second PUCCH resource.

15. The network device according to claim 13, wherein the second transmission module(903) is configured to receive the aperiodic CSI on the first PUCCH resource, and receive the HARQ-ACK on the second PUCCH resource;
wherein, the first PUCCH resource and the second PUCCH resource are in a same slot, and do not overlap in the time domain;
or, the first PUCCH resource and the second PUCCH resource are in different slots.

16. The network device according to claim 14, wherein,
the first feedback timing is pre-configured by higher layer signaling, or is indicated by an aperiodic CSI feedback timing indication field in the downlink DCI, or is indicated by an HARQ-ACK feedback timing indication field in the downlink DCI;
and/or,
wherein, the first PUCCH resource is configured by higher layer signaling, or is indicated by an aperiodic CSI PUCCH resource indication field in the downlink DCI, or is indicated by an HARQ-ACK resource indication field in the downlink DCI.

## Patentansprüche

1. Verfahren zur Informationsübertragung, das auf ein Endgerät angewendet wird, umfassend:
Empfangen (201) von Downlink-Steuerungsinformationen, DCI, wobei die Downlink-DCI ein aperiodisches Kanalzustandsinformation-, CSI-, Triggerinformationsfeld aufweist;
wenn das aperiodische CSI-Triggerinformationsfeld in der Downlink-DCI anzeigt, dass aperiodische CSI gemeldet werden sollen, Bestimmen (202) einer ersten Ressource für die aperiodische CSI und einer zweiten Ressource für eine hybride automatische Wiederholungsanforderungsbestätigung, HARQ-ACK, entsprechend der Downlink-DCI;
Übertragen (203) der aperiodischen CSI auf der ersten Ressource der Übertragung und Übertragen der HARQ-ACK auf der zweiten Ressource der Übertragung;
wobei, wenn die Downlink-DCI die DCI ist, die die SPS-PDSCH-Freigabe anzeigt, die HARQ-ACK, die der Downlink-DCI entspricht, eine HARQ-ACK ist, die der DCI entspricht, die die SPS-PDSCH-Freigabe anzeigt; oder
wenn die Downlink-DCI die DCI ist, die die PDSCH-Übertragung plant, die HARQ-ACK, die der Downlink-DCI entspricht, eine HARQ-ACK des PDSCH, der durch die Downlink-DCI geplant ist, ist;
wobei
das Bestimmen der ersten Ressource für die aperiodische CSI umfasst:
Bestimmen eines ersten Rückmeldungszeitpunkts der aperiodischen CSI und einer ersten physikalischen Uplink-Steuerkanal-, PUCCH-, Ressource zum Übertragen der aperiodischen CSI;
wobei der erste Rückmeldungszeitpunkt ein Intervall zwischen einer ersten Zeitbereichsressource der Downlink-DCI, die die aperiodische CSI triggert, und einer zweiten Zeitbereichsressource zum Übertragen der aperiodischen CSI ist;
die erste Zeitbereichsressource das letzte Symbol der Downlink-DCI ist, die die aperiodische CSI triggert, und die zweite Zeitbereichsressource das erste Symbol des PUCCH zum Übertragen der aperiodischen CSI ist.

2. Verfahren zur Informationsübertragung gemäß Anspruch 1, wobei das Bestimmen der zweiten Übertragungsressource für die HARQ-ACK entsprechend der Downlink-DCI umfasst:
Bestimmen eines zweiten Rückmeldungszeitpunkts der HARQ-ACK und einer zweiten PUCCH-Ressource zum Übertragen der HARQ-ACK;
wobei der erste Rückmeldungszeitpunkt sich vom zweiten Rückmeldungszeitpunkt unterscheidet und/oder die erste PUCCH-Ressource sich von der zweiten PUCCH-Ressource unterscheidet.

3. Verfahren zur Informationsübertragung gemäß Anspruch 1, wobei das Übertragen der aperiodischen CSI auf der ersten Übertragungsressource und das Übertragen der HARQ-ACK auf der zweiten Übertragungsressource umfasst:
Übertragen der aperiodischen CSI auf einer ersten PUCCH-Ressource und Übertragen der HARQ-ACK auf einer zweiten PUCCH-Ressource;
wobei sich die erste PUCCH-Ressource und die zweite PUCCH-Ressource in einem gleichen Slot befinden und sich im Zeitbereich nicht überlappen;
oder
die erste PUCCH-Ressource und die zweite PUCCH-Ressource sich in unterschiedlichen Slots befinden.

4. Verfahren zur Informationsübertragung gemäß Anspruch 2, wobei
der erste Rückmeldungszeitpunkt durch Signalisierung einer höheren Schicht vorkonfiguriert ist oder durch ein aperiodisches CSI-Rückmeldungszeitpunkt-Anzeigefeld im Downlink-DCI angezeigt wird oder durch ein HARQ-ACK-Rückmeldungszeitpunkt-Anzeigefeld im Downlink-DCI angezeigt wird;
und/oder
wobei
die erste PUCCH-Ressource durch Signalisierung einer höheren Schicht konfiguriert wird oder durch ein aperiodisches CSI-PUCCH-Ressourcenanzeigefeld im Downlink-DCI angezeigt wird oder durch ein HARQ-ACK-Ressourcenanzeigefeld im Downlink-DCI angezeigt wird.

5. Verfahren zur Informationsübertragung, das auf ein Netzwerkgerät angewendet wird, umfassend:
Senden (301) von Downlink-Steuerinformationen, DCI, wobei die Downlink-DCI ein aperiodisches Kanalzustandsinformation-, CSI-, Triggerinformationsfeld aufweist;
wenn das aperiodische CSI-Triggerinformationsfeld im Downlink-DCI anzeigt, dass aperiodische CSI gemeldet werden sollen, Bestimmen (302) einer ersten Ressource für die aperiodische CSI und einer zweiten Ressource für eine hybride automatische Wiederholungsanforderungsbestätigung, HARQ-ACK, entsprechend der Downlink-DCI;
Empfangen (303) der aperiodischen CSI auf der ersten Ressource der Übertragung und Empfangen der HARQ-ACK auf der zweiten Ressource der Übertragung;
wobei, wenn die Downlink-DCI die DCI ist, die die SPS-PDSCH-Freigabe anzeigt, die HARQ-ACK, die der Downlink-DCI entspricht, eine HARQ-ACK ist, die der DCI entspricht, die die SPS-PDSCH-Freigabe anzeigt; oder
wenn die Downlink-DCI die DCI ist, die die PDSCH-Übertragung plant, die HARQ-ACK, die der Downlink-DCI entspricht, eine HARQ-ACK der PDSCH, die durch die Downlink-DCI geplant ist, ist;
wobei
Bestimmen der ersten Ressource für die aperiodische CSI umfasst:
Bestimmen eines ersten Rückmeldungszeitpunkts der aperiodischen CSI und einer ersten physikalischen Uplink--Steuerkanal-, PUCCH-, Ressource zum Übertragen der aperiodischen CSI;
wobei der erste Rückmeldungszeitpunkt ein Intervall zwischen einer ersten Zeitbereichsressource der Downlink-DCI, die die aperiodische CSI triggert, und einer zweiten Zeitbereichsressource zum Übertragen der aperiodischen CSI ist;
die erste Zeitbereichsressource das letzte Symbol der Downlink-DCI ist, die die aperiodische CSI triggert, und die zweite Zeitbereichsressource das erste Symbol des PUCCH zum Übertragen der aperiodischen CSI ist.

6. Verfahren zur Informationsübertragung gemäß Anspruch 5, wobei das Bestimmen der zweiten Übertragungsressource für das HARQ-ACK entsprechend der Downlink-DCI umfasst:
Bestimmen eines zweiten Rückmeldungszeitpunkts der HARQ-ACK und einer zweiten PUCCH-Ressource zum Übertragen der HARQ-ACK;
wobei der erste Rückmeldungszeitpunkt sich vom zweiten Rückmeldungszeitpunkt unterscheidet und/oder die erste PUCCH-Ressource sich von der zweiten PUCCH-Ressource unterscheidet.

7. Verfahren zur Informationsübertragung gemäß Anspruch 5, wobei das Empfangen der aperiodischen CSI auf der ersten Übertragungsressource und das Empfangen des HARQ-ACK auf der zweiten Übertragungsressource umfasst:
Empfangen der aperiodischen CSI auf einer ersten PUCCH-Ressource und Empfangen der HARQ-ACK auf einer zweiten PUCCH-Ressource;
wobei sich die erste PUCCH-Ressource und die zweite PUCCH-Ressource in einem gleichen Slot befinden und sich im Zeitbereich nicht überlappen;
oder
die erste PUCCH-Ressource und die zweite PUCCH-Ressource sich in unterschiedlichen Slots befinden.

8. Verfahren zur Informationsübertragung gemäß Anspruch 6, wobei
der erste Rückmeldungszeitpunkt durch Signalisierung einer höheren Schicht vorkonfiguriert ist oder durch ein aperiodisches CSI-Rückmeldungszeitpunkt-Anzeigefeld im Downlink-DCI angezeigt wird oder durch ein HARQ-ACK-Rückmeldungszeitpunkt-Anzeigefeld im Downlink-DCI angezeigt wird;
und/oder
wobei
die erste PUCCH-Ressource durch Signalisierung einer höheren Schicht konfiguriert wird oder durch ein aperiodisches CSI-PUCCH-Ressourcenanzeigefeld im Downlink-DCI angezeigt wird, oder durch ein HARQ-ACK-Ressourcenanzeigefeld im Downlink-DCI angezeigt wird.

9. Endgerät, aufweisend:
ein Empfangsmodul (701), das zum Empfangen von Downlink-Steuerungsinformationen, DCI, konfiguriert ist, wobei die Downlink-DCI ein aperiodisches Kanalzustandsinformation-, CSI-, Triggerinformationsfeld aufweist;
ein erstes Bestimmungsmodul (702), das konfiguriert ist, dass es, wenn das aperiodische CSI-Triggerinformationsfeld in der Downlink-DCI anzeigt, dass aperiodische CSI gemeldet werden sollen, eine erste Übertragungsressource für die aperiodische CSI und eine zweite Übertragungsressource für eine hybride automatische Wiederholungsanforderungsbestätigung (HARQ-ACK) entsprechend der Downlink-DCI bestimmt;
ein erstes Übertragungsmodul (703), das konfiguriert ist, die aperiodische CSI auf der ersten Ressource für die Übertragung zu übertragen und die HARQ-ACK auf der zweiten Ressource für die Übertragung zu übertragen;
wobei, wenn die Downlink-DCI die DCI ist, die die SPS-PDSCH-Freigabe anzeigt, die HARQ-ACK, die der Downlink-DCI entspricht, eine HARQ-ACK ist, die der DCI entspricht, die die SPS-PDSCH-Freigabe anzeigt; oder
wenn die Downlink-DCI die DCI ist, die die PDSCH-Übertragung plant, die HARQ-ACK, die der Downlink-DCI entspricht, eine HARQ-ACK des PDSCH, die durch die Downlink-DCI geplant ist, ist;
wobei das erste Bestimmungsmodul (702) aufweist:
ein erstes Bestimmungs-Submodul, das konfiguriert ist, einen ersten Rückmeldungszeitpunkt der aperiodischen CSI und eine erste physikalische Uplink-Steuerkanal-, PUCCH-, Ressource zum Übertragen der aperiodischen CSI zu bestimmen;
wobei der erste Rückmeldungszeitpunkt ein Intervall zwischen einer ersten Zeitbereichsressource der Downlink-DCI, die die aperiodische CSI triggert, und einer zweiten Zeitbereichsressource zum Übertragen der aperiodischen CSI ist;
die erste Zeitbereichsressource das letzte Symbol der Downlink-DCI ist, die die aperiodische CSI triggert, und die zweite Zeitbereichsressource das erste Symbol des PUCCH zum Übertragen der aperiodischen CSI ist.

10. Endgerät gemäß Anspruch 9, wobei das erste Bestimmungsmodul (702) ferner aufweist:
ein zweites Bestimmungs-Submodul, das konfiguriert ist, einen zweiten Rückmeldungszeitpunkt der HARQ-ACK und eine zweite physikalische Uplink-Steuerkanal-PUCCH-Ressource zum Übertragen der HARQ-ACK zu bestimmen;
wobei sich der erste Rückmeldungszeitpunkt vom zweiten Rückmeldungszeitpunkt unterscheidet und/oder sich die erste PUCCH-Ressource von der zweiten PUCCH-Ressource unterscheidet;

11. Endgerät gemäß Anspruch 9, wobei das erste Übertragungsmodul (703) konfiguriert ist, die aperiodische CSI auf der ersten PUCCH-Ressource zu übertragen und die HARQ-ACK auf der zweiten PUCCH-Ressource zu übertragen;
wobei sich die erste PUCCH-Ressource und die zweite PUCCH-Ressource in einem gleichen Slot befinden und sich im Zeitbereich nicht überlappen;
oder
die erste PUCCH-Ressource und die zweite PUCCH-Ressource sich in unterschiedlichen Slots befinden.

12. Endgerät gemäß Anspruch 10, wobei
der erste Rückmeldungszeitpunkt durch Signalisierung einer höheren Schicht vorkonfiguriert ist oder durch ein aperiodisches CSI-Rückmeldungszeitpunkt-Anzeigefeld im Downlink-DCI angezeigt wird oder durch ein HARQ-ACK-Rückmeldungszeitpunkt-Anzeigefeld im Downlink-DCI angezeigt wird;
und/oder
wobei
die erste PUCCH-Ressource durch Signalisierung einer höheren Schicht konfiguriert wird oder durch ein aperiodisches CSI-PUCCH-Ressourcenanzeigefeld im Downlink-DCI angezeigt wird oder durch ein HARQ-ACK-Ressourcenanzeigefeld im Downlink-DCI angezeigt wird.

13. Netzwerkgerät, aufweisend:
ein Sendemodul (901), das konfiguriert ist, Downlink-Steuerinformationen, DCI, zu senden, wobei die Downlink-DCI ein aperiodisches Kanalzustandsinformation-, CSI-, Triggerinformationsfeld aufweist;
ein zweites Bestimmungsmodul (902), das konfiguriert ist, dass es, wenn das aperiodische CSI-Triggerinformationsfeld im Downlink-DCI anzeigt, dass aperiodische CSI gemeldet werden sollen, eine erste Übertragungsressource für die aperiodische CSI und eine zweite Übertragungsressource für eine hybride automatische Wiederholungsanforderungsbestätigung (HARQ-ACK) entsprechend dem Downlink-DCI bestimmt;
ein zweites Übertragungsmodul (903), das konfiguriert ist, die aperiodische CSI auf der ersten Übertragungsressource zu empfangen und die HARQ-ACK auf der zweiten Übertragungsressource zu empfangen;
wobei, wenn die Downlink-DCI die DCI ist, die die SPS-PDSCH-Freigabe anzeigt, die HARQ-ACK, die der Downlink-DCI entspricht, eine HARQ-ACK ist, die der DCI entspricht, die die SPS-PDSCH-Freigabe anzeigt; oder
wenn die Downlink-DCI die DCI ist, die die PDSCH-Übertragung plant, die HARQ-ACK, die der Downlink-DCI entspricht, eine HARQ-ACK des PDSCH, die durch die Downlink-DCI geplant ist, ist;
wobei das zweite Bestimmungsmodul (902) aufweist:
ein drittes Bestimmungs-Submodul, das konfiguriert ist, einen ersten Rückmeldungszeitpunkt des aperiodischen CSI und eine erste physikalische Uplink-Steuerkanal-, PUCCH-, Ressource zum Übertragen der aperiodischen CSI zu bestimmen;
wobei der erste Rückmeldungszeitpunkt ein Intervall zwischen einer ersten Zeitbereichsressource der Downlink-DCI, die den aperiodischen CSI triggert, und einer zweiten Zeitbereichsressource zum Übertragen der aperiodischen CSI ist;
die erste Zeitbereichsressource das letzte Symbol der Downlink-DCI ist, die die aperiodische CSI triggert, und die zweite Zeitbereichsressource das erste Symbol des PUCCH zum Übertragen der aperiodischen CSI ist.

14. Netzwerkgerät gemäß Anspruch 13, wobei das zweite Bestimmungsmodul (902) ferner aufweist:
ein viertes Bestimmungs-Submodul, das konfiguriert ist, einen zweiten Rückmeldungszeitpunkt der HARQ-ACK und eine zweite physikalische Uplink-Steuerkanal-PUCCH-Ressource zum Übertragen der HARQ-ACK zu bestimmen;
wobei sich der erste Rückmeldungszeitpunkt vom zweiten Rückmeldungszeitpunkt unterscheidet und/oder sich die erste PUCCH-Ressource von der zweiten PUCCH-Ressource unterscheidet.

15. Netzwerkgerät gemäß Anspruch 13, wobei das zweite Übertragungsmodul (903) konfiguriert ist, die aperiodische CSI auf der ersten PUCCH-Ressource zu empfangen und die HARQ-ACK auf der zweiten PUCCH-Ressource zu empfangen;
wobei sich die erste PUCCH-Ressource und die zweite PUCCH-Ressource in einem gleichen Slot befinden und sich im Zeitbereich nicht überlappen;
oder die erste PUCCH-Ressource und die zweite PUCCH-Ressource sich in unterschiedlichen Slots befinden.

16. Netzwerkgerät gemäß Anspruch 14, wobei
der erste Rückmeldungszeitpunkt durch Signalisierung einer höheren Schicht vorkonfiguriert ist oder durch ein aperiodisches CSI-Rückmeldungszeitpunkt-Anzeigefeld im Downlink-DCI angezeigt wird oder durch ein HARQ-ACK-Rückmeldungszeitpunkt-Anzeigefeld im Downlink-DCI angezeigt wird;
und/oder
wobei die erste PUCCH-Ressource durch Signalisierung einer höheren Schicht konfiguriert wird oder durch ein aperiodisches CSI-PUCCH-Ressourcenanzeigefeld im Downlink-DCI angezeigt wird oder durch ein HARQ-ACK-Ressourcenanzeigefeld im Downlink-DCI angezeigt wird.

## Revendications

1. Procédé de transmission d'informations, appliqué à un terminal, comprenant de :
recevoir (201) des informations de contrôle de liaison descendante (DCI) de liaison descendante, dans lequel les DCI de liaison descendante comprennent un champ d'informations de déclenchement d'informations d'état de canal (CSI) apériodiques ;
lorsque le champ d'informations de déclenchement de CSI apériodiques dans les DCI de liaison descendante indique que les CSI apériodiques doivent être rapportées, déterminer (202) une première ressource de transmission pour les CSI apériodiques et une seconde ressource de transmission pour un acquittement de requête de répétition automatique hybride (HARQ-ACK) correspondant aux DCI de liaison descendante ;
transmettre (203) les CSI apériodiques sur la première ressource de transmission et transmettre le HARQ-ACK sur la seconde ressource de transmission ;
dans lequel
lorsque les DCI de liaison descendante sont les DCI indiquant le déclenchement du PDSCH de SPS, le HARQ-ACK correspondant aux DCI de liaison descendante est un HARQ-ACK correspondant aux DCI indiquant le déclenchement du PDSCH de SPS ; ou
lorsque les DCI de liaison descendante sont les DCI programmant la transmission de PDSCH, le HARQ-ACK correspondant aux DCI de liaison descendante est un HARQ-ACK du PDSCH programmé par les DCI de liaison descendante ; dans lequel
la détermination de la première ressource de transmission pour les CSI apériodiques comprend de :
déterminer une première synchronisation de retour des CSI apériodiques et une première ressource de canal de contrôle de liaison montante physique (PUCCH) pour transmettre les CSI apériodiques ;
dans lequel la première synchronisation de retour est un intervalle entre une première ressource du domaine temporel des DCI de liaison descendante déclenchant les CSI apériodiques, et une seconde ressource du domaine temporel pour transmettre les CSI apériodiques ;
la première ressource du domaine temporel est le dernier symbole des DCI de liaison descendante déclenchant les CSI apériodiques, et la seconde ressource du domaine temporel est le premier symbole du PUCCH pour transmettre les CSI apériodiques.

2. Procédé de transmission d'informations selon la revendication 1, dans lequel la détermination de la seconde ressource de transmission pour le HARQ-ACK correspondant aux DCI de liaison descendante comprend de :
déterminer une seconde synchronisation de retour du HARQ-ACK et une seconde ressource de PUCCH pour transmettre le HARQ-ACK ;
dans lequel la première synchronisation de retour est différente de la seconde synchronisation de retour, et/ou la première ressource de PUCCH est différente de la seconde ressource de PUCCH.

3. Procédé de transmission d'informations selon la revendication 1, dans lequel la transmission des CSI apériodiques sur la première ressource de transmission et la transmission du HARQ-ACK sur la seconde ressource de transmission comprennent de :
transmettre les CSI apériodiques sur une première ressource de PUCCH et transmettre le HARQ-ACK sur une seconde ressource de PUCCH ;
dans lequel la première ressource de PUCCH et la seconde ressource de PUCCH sont dans un même créneau et ne se chevauchent pas dans le domaine temporel ; ou
la première ressource de PUCCH et la seconde ressource de PUCCH sont dans des créneaux différents.

4. Procédé de transmission d'informations selon la revendication 2, dans lequel :
la première synchronisation de retour est pré-configurée par une signalisation de couches supérieures, ou est indiquée par un champ d'indication de synchronisation de retour de CSI apériodiques dans les DCI de liaison descendante, ou est indiquée par un champ d'indication de synchronisation de retour de HARQ-ACK dans les DCI de liaison descendante ;
et/ou,
dans lequel
la première ressource de PUCCH est configurée par une signalisation de couches supérieures, ou est indiquée par un champ d'indication de ressource de PUCCH de CSI apériodiques dans les DCI de liaison descendante, ou est indiquée par un champ d'indication de ressource de HARQ-ACK dans les DCI de liaison descendante.

5. Procédé de transmission d'informations, appliqué à un dispositif de réseau, comprenant de :
envoyer (301) des informations de contrôle de liaison descendante (DCI) de liaison descendante, dans lequel les DCI de liaison descendante comprennent un champ d'informations de déclenchement d'informations d'état de canal (CSI) apériodiques ;
lorsque le champ d'informations de déclenchement de CSI apériodiques dans les DCI de liaison descendante indique que les CSI apériodiques doivent être rapportées, déterminer (302) une première ressource de transmission pour les CSI apériodiques et une seconde ressource de transmission pour un acquittement de requête de répétition automatique hybride (HARQ-ACK) correspondant aux DCI de liaison descendante ;
recevoir (303) les CSI apériodiques sur la première ressource de transmission, et
recevoir le HARQ-ACK sur la seconde ressource de transmission ;
dans lequel
lorsque les DCI de liaison descendante sont les DCI indiquant le déclenchement du PDSCH de SPS, le HARQ-ACK correspondant aux DCI de liaison descendante est un HARQ-ACK correspondant aux DCI indiquant le déclenchement du PDSCH de SPS ; ou
lorsque les DCI de liaison descendante sont les DCI programmant la transmission de PDSCH, le HARQ-ACK correspondant aux DCI de liaison descendante est un HARQ-ACK du PDSCH programmé par les DCI de liaison descendante ;
dans lequel
la détermination de la première ressource de transmission pour les CSI apériodiques comprend de :
déterminer une première synchronisation de retour des CSI apériodiques et une première ressource de canal de contrôle de liaison montante physique (PUCCH) pour transmettre les CSI apériodiques ;
dans lequel la première synchronisation de retour est un intervalle entre une première ressource du domaine temporel des DCI de liaison descendante déclenchant les CSI apériodiques, et une seconde ressource du domaine temporel pour transmettre les CSI apériodiques ;
la première ressource du domaine temporel est le dernier symbole des DCI de liaison descendante déclenchant les CSI apériodiques, et la seconde ressource du domaine temporel est le premier symbole du PUCCH pour transmettre les CSI apériodiques.

6. Procédé de transmission d'informations selon la revendication 5, dans lequel la détermination de la seconde ressource de transmission pour le HARQ-ACK correspondant aux DCI de liaison descendante comprend de :
déterminer une seconde synchronisation de retour du HARQ-ACK et une seconde ressource de PUCCH pour transmettre le HARQ-ACK ;
dans lequel la première synchronisation de retour est différente de la seconde synchronisation de retour, et/ou la première ressource de PUCCH est différente de la seconde ressource de PUCCH.

7. Procédé de transmission d'informations selon la revendication 5, dans lequel la réception des CSI apériodiques sur la première ressource de transmission et la réception du HARQ-ACK sur la seconde ressource de transmission comprennent de :
recevoir les CSI apériodiques sur une première ressource de PUCCH et recevoir le HARQ-ACK sur une seconde ressource de PUCCH ;
dans lequel,
la première ressource de PUCCH et la seconde ressource de PUCCH sont dans un même créneau et ne se chevauchent pas dans le domaine temporel ; ou
la première ressource de PUCCH et la seconde ressource de PUCCH sont dans des créneaux différents.

8. Procédé de transmission d'informations selon la revendication 6, dans lequel :
la première synchronisation de retour est pré-configurée par une signalisation de couches supérieures, ou est indiquée par un champ d'indication de synchronisation de retour de CSI apériodiques dans les DCI de liaison descendante, ou est indiquée par un champ d'indication de synchronisation de retour de HARQ-ACK dans les DCI de liaison descendante ;
et/ou,
dans lequel la première ressource de PUCCH est configurée par une signalisation de couches supérieures, ou est indiquée par un champ d'indication de ressource de PUCCH de CSI apériodiques dans les DCI de liaison descendante,
ou est indiquée par un champ d'indication de ressource de HARQ-ACK dans les DCI de liaison descendante.

9. Terminal, comprenant :
un module de réception (701), configuré pour recevoir des informations de contrôle de liaison descendante (DCI) de liaison descendante, dans lequel les DCI de liaison descendante comprennent un champ d'informations de déclenchement d'informations d'état de canal (CSI) apériodiques ;
un premier module de détermination (702), configuré pour, lorsque le champ d'informations de déclenchement de CSI apériodiques dans les DCI de liaison descendante indique que les CSI apériodiques doivent être rapportées, déterminer une première ressource de transmission pour les CSI apériodiques et une seconde ressource de transmission pour un acquittement de requête de répétition automatique hybride (HARQ-ACK) correspondant aux DCI de liaison descendante ;
un premier module de transmission (703), configuré pour transmettre les CSI apériodiques sur la première ressource de transmission et transmettre le HARQ-ACK sur la seconde ressource de transmission ;
dans lequel
lorsque les DCI de liaison descendante sont les DCI indiquant le déclenchement du PDSCH de SPS, le HARQ-ACK correspondant aux DCI de liaison descendante est un HARQ-ACK correspondant aux DCI indiquant le déclenchement du PDSCH de SPS ; ou
lorsque les DCI de liaison descendante sont les DCI programmant la transmission de PDSCH, le HARQ-ACK correspondant aux DCI de liaison descendante est un HARQ-ACK du PDSCH programmé par les DCI de liaison descendante ;
dans lequel le premier module de détermination (702) comprend :
un premier sous-module de détermination configuré pour déterminer une première synchronisation de retour des CSI apériodiques et une première ressource de canal de contrôle de liaison montante physique (PUCCH) pour transmettre les CSI apériodiques ;
dans lequel la première synchronisation de retour est un intervalle entre une première ressource du domaine temporel des DCI de liaison descendante déclenchant les CSI apériodiques, et une seconde ressource du domaine temporel pour transmettre les CSI apériodiques ;
la première ressource du domaine temporel est le dernier symbole des DCI de liaison descendante déclenchant les CSI apériodiques, et la seconde ressource du domaine temporel est le premier symbole du PUCCH pour transmettre les CSI apériodiques.

10. Terminal selon la revendication 9, dans lequel le premier module de détermination (702) comprend en outre :
un deuxième sous-module de détermination configuré pour déterminer une seconde synchronisation de retour du HARQ-ACK et une seconde ressource de canal de contrôle physique de liaison montante PUCCH pour transmettre le HARQ-ACK ;
dans lequel la première synchronisation de retour est différente de la seconde synchronisation de retour, et/ou la première ressource de PUCCH est différente de la seconde ressource de PUCCH.

11. Terminal selon la revendication 9, dans lequel le premier module de transmission (703) est configuré pour transmettre les CSI apériodiques sur la première ressource de PUCCH, et transmettre le HARQ-ACK sur la seconde ressource de PUCCH ;
dans lequel la première ressource de PUCCH et la seconde ressource de PUCCH sont dans un même créneau et ne se chevauchent pas dans le domaine temporel ;
ou,
la première ressource de PUCCH et la seconde ressource de PUCCH sont dans des créneaux différents.

12. Terminal selon la revendication 10, dans lequel
la première synchronisation de retour est pré-configurée par une signalisation de couches supérieures, ou est indiquée par un champ d'indication de synchronisation de retour de CSI apériodiques dans les DCI de liaison descendante, ou est indiquée par un champ d'indication de synchronisation de retour de HARQ-ACK dans les DCI de liaison descendante ;
et/ou,
dans lequel
la première ressource de PUCCH est configurée par une signalisation de couches supérieures, ou est indiquée par un champ d'indication de ressource de PUCCH de CSI apériodiques dans les DCI de liaison descendante, ou est indiquée par un champ d'indication de ressource de HARQ-ACK dans les DCI de liaison descendante.

13. Dispositif de réseau, comprenant :
un module d'envoi (901), configuré pour envoyer des informations de contrôle de liaison descendante (DCI) de liaison descendante, dans lequel les DCI de liaison descendante comprennent un champ d'informations de déclenchement d'informations d'état de canal (CSI) apériodiques ;
un second module de détermination (902), configuré pour, lorsque le champ d'informations de déclenchement de CSI apériodiques dans les DCI de liaison descendante indique que les CSI apériodiques doivent être rapportées, déterminer une première ressource de transmission pour les CSI apériodiques et une seconde ressource de transmission pour un acquittement de requête de répétition automatique hybride (HARQ-ACK) correspondant aux DCI de liaison descendante ;
un second module de transmission (903), configuré pour recevoir les CSI apériodiques sur la première ressource de transmission et recevoir le HARQ-ACK sur la seconde ressource de transmission ;
dans lequel
lorsque les DCI de liaison descendante sont les DCI indiquant le déclenchement du PDSCH de SPS, le HARQ-ACK correspondant aux DCI de liaison descendante est un HARQ-ACK correspondant aux DCI indiquant le déclenchement du PDSCH de SPS ; ou
lorsque les DCI de liaison descendante sont les DCI programmant la transmission de PDSCH, le HARQ-ACK correspondant aux DCI de liaison descendante est un HARQ-ACK du PDSCH programmé par les DCI de liaison descendante ;
dans lequel le second module de détermination (902) comprend :
un troisième sous-module de détermination configuré pour déterminer une première synchronisation de retour des CSI apériodiques et une première ressource de canal de contrôle de liaison montante physique (PUCCH) pour transmettre les CSI apériodiques ;
dans lequel la première synchronisation de retour est un intervalle entre une première ressource du domaine temporel des DCI de liaison descendante déclenchant les CSI apériodiques, et une seconde ressource du domaine temporel pour transmettre les CSI apériodiques ;
la première ressource du domaine temporel est le dernier symbole des DCI de liaison descendante déclenchant les CSI apériodiques, et la seconde ressource du domaine temporel est le premier symbole du PUCCH pour transmettre les CSI apériodiques.

14. Dispositif de réseau selon la revendication 13, dans lequel le second module de détermination (902) comprend en outre :
un quatrième sous-module de détermination configuré pour déterminer une seconde synchronisation de retour du HARQ-ACK et une seconde ressource de PUCCH pour transmettre le HARQ-ACK ;
dans lequel la première synchronisation de retour est différente de la seconde synchronisation de retour, et/ou la première ressource de PUCCH est différente de la seconde ressource de PUCCH.

15. Dispositif de réseau selon la revendication 13, dans lequel le second module de transmission (903) est configuré pour recevoir les CSI apériodiques sur la première ressource de PUCCH, et recevoir le HARQ-ACK sur la seconde ressource de PUCCH ;
dans lequel la première ressource de PUCCH et la seconde ressource de PUCCH sont dans un même créneau et ne se chevauchent pas dans le domaine temporel ;
ou la première ressource de PUCCH et la seconde ressource de PUCCH sont dans des créneaux différents.

16. Dispositif de réseau selon la revendication 14, dans lequel
la première synchronisation de retour est pré-configurée par une signalisation de couches supérieures, ou est indiquée par un champ d'indication de synchronisation de retour de CSI apériodiques dans les DCI de liaison descendante, ou est indiquée par un champ d'indication de synchronisation de retour de HARQ-ACK dans les DCI de liaison descendante ;
et/ou,
dans lequel la première ressource de PUCCH est configurée par une signalisation de couches supérieures, ou est indiquée par un champ d'indication de ressource de PUCCH de CSI apériodiques dans les DCI de liaison descendante, ou est indiquée par un champ d'indication de ressource de HARQ-ACK dans les DCI de liaison descendante.
